(19) Europäisches Patentamt

European Patent Office

Office européen des brevets

(11) **EP 0 733 508 B1**

(12) **EUROPEAN PATENT SPECIFICATION**

(45) Date of publication and mention
of the grant of the patent:
**29.05.2002 Bulletin 2002/22**

(51) Int Cl.⁷: **B60K 41/02**, F16H 61/04,
F16H 61/12
// F16H59:44, F16H59:46,
F16H59:50, F16H61:20

(21) Application number: **95116442.5**

(22) Date of filing: **18.10.1995**

(54) **Control system for automatic transmission**

Steuerungssystem für automatisches Getriebe

Système de commande pour transmission automatique

(84) Designated Contracting States:
**DE GB**

(30) Priority: **27.12.1994 JP 32626694**

(43) Date of publication of application:
**25.09.1996 Bulletin 1996/39**

(73) Proprietor: **AISIN AW CO., LTD.**
**Anjo-shi Aichi-ken (JP)**

(72) Inventors:
• **Tsutsui, Hiroshi, c/o Aisin AW Co., Ltd.**
**Anjo-shi, Aichi-ken 444-11 (JP)**
• **Tsukamoto, Kazumasa, c/o Aisin AW Co., Ltd.**
**Anjo-shi, Aichi-ken 444-11 (JP)**
• **Hayabuchi, Masahiro, c/o Aisin AW Co., Ltd.**
**Anjo-shi, Aichi-ken 444-11 (JP)**
• **Nishida, Masaaki, c/o Aisin AW Co., Ltd.**
**Anjo-shi, Aichi-ken 444-11 (JP)**
• **Yamamoto, Yoshihisa, c/o Aisin AW Co., Ltd.**
**Anjo-shi, Aichi-ken 444-11 (JP)**

(74) Representative: **VOSSIUS & PARTNER**
**Siebertstrasse 4**
**81675 München (DE)**

(56) References cited:
**US-A- 4 633 985** **US-A- 4 785 689**
**US-A- 4 850 251** **US-A- 5 329 830**

• **PATENT ABSTRACTS OF JAPAN vol. 018, no.**
**512 (M-1679), 27 September 1994 & JP 06 174079**
**A (TOYOTA MOTOR CORP), 21 June 1994,**

**Description**

The present invention relates to a control system for an automatic transmission.

In the automatic transmission of the prior art, the rotation, as generated by the engine, is transmitted through a fluid transmission unit such as a torque converter to a speed change unit, in which the speed is changed. Between the fluid transmission unit and the speed change unit, moreover, there is arranged a first clutch acting as an input clutch, which can be applied/released to change the range between a neutral range and a forward running range.

In the automatic transmission, when the range is to be changed from the neutral range to the forward running range (as will be called the "N-D change") by manipulating a speed select unit such as the shift lever, the N-D change can controlled for applying the first clutch smoothly by gradually boosting the oil pressure of the hydraulic servo of the first clutch. Moreover, when the forward running range is selected at the stop state of the vehicle, a neutral control can be effected for bringing the first clutch into a predetermined released state by reducing the oil pressure of the hydraulic servo of the first clutch (as disclosed in U.S.P. No. 4,850,251).

For this, the hydraulic control system for the automatic transmission is arranged with a control valve controlled in accordance with a signal pressure for generating a control oil pressure and a change-over valve for feeding the control oil pressure and a line pressure (or a forward running range pressure) selectively to the hydraulic servo.

In case the oil pressure of the hydraulic servo is to be controlled, moreover, the control system for the automatic transmission switches the change-over valve to connect the control valve and the hydraulic servo thereby to feed the control oil pressure from the control valve to the hydraulic servo. As a result, the first clutch can be placed in a predetermined engaging state corresponding to the control oil pressure. Moreover, the control system for the automatic transmission switches the change-over valve, in case the oil pressure of the hydraulic servo need not be controlled, to feed the line pressure (or the forward running range pressure) to the hydraulic servo. As a result, the first clutch can be brought into the engaging state.

In the hydraulic control unit, the control oil pressure may not be generated in the control valve by some cause to invite a fail state. In this case, the change-over valve can be switched to feed the line pressure (or the forward running range pressure) to the hydraulic servo thereby to apply the first clutch.

Specifically, the control system for the automatic transmission is given a fail-safe function to release the N-D control or the neutral control so that the first clutch can be applied to start the vehicle, if the fail state occurs when the vehicle is to be started during the N-D change control or the neutral control.

In the control system for the automatic transmission of the prior art, however, a shifting shock may occur as the first clutch is applied.

For example, it is conceivable to decide whether or not the fail state has occurred by the timing operation of a guard timer. In case the vehicle is to be started during the N-D change control, the timing operation by the guard timer is started when the N-D change by the shift selector is detected. If the engagement of the first clutch is not ended at the end of the timing operation, it is decided that the fail state has occurred.

On the other hand, in case the vehicle is to be started during the neutral control, the driver will detach his foot from the brake pedal and depresses the accelerator pedal. When these starting operations are made, the timing operation by the guard timer is started. If the engagement of the first clutch is not ended at the end of the timing operation, it is decided that the fail state has occurred.

Incidentally, when the accelerator pedal is depressed simultaneously with the N-D change with a view to starting the vehicle during the N-D change control, the engine R.P.M. rises by the time it is decided that the fail state has occurred. As a result, the engaging shock will occur, if the occurrence of the fail state is decided to release the N-D change control thereby to apply the first clutch.

Likewise, if the accelerator pedal is depressed simultaneously as the brake pedal is released so as to start the vehicle during the neutral control, the engine R.P.M. rises by the time the occurrence of the fail state is decided. As a result, the engaging shock will occur, if the occurrence of the fail state is decided to release the neutral control thereby to apply the first clutch.

US-A-4,850,251 discloses the preamble of claim 1 or 2 and discloses a hydraulic control device of an automatic transmission for a vehicle utilising a shift valve for shifting at a high speed stage to prevent creeping and provide a hill-stop mechanism. The shift valve for shifting at the high speed stage has a port open to a forward dutch hydraulic servo, a port communicating with a brake hydraulic servo, and a port receiving modulator pressure from a modulator valve. A solenoid valve controlling the shift valve is in turn controlled by signals issued when the vehicle stops and begins to travel, and the modulator valve is controlled by a linear solenoid throttle valve. The modulator pressure is applied to the forward clutch hydraulic servo, and line pressure is applied to the brake hydraulic servo when the vehicle stops. Line pressure is applied to the forward clutch hydraulic servo and line pressure to the brake hydraulic servo is drained when the vehicle runs.

US-A-4,633,985 relates to a device for controlling the supply pressure of a hydraulic actuator for an automatic transmission of an automobile. A pressure modulator varies the hydraulic pressure depending on the output of a controller. The controller receives input information on engine speed, turbine speed, engine load and vehicle speed. The transmission is controlled to be disengaged when the automobile is stopped, and re-engaged smoothly.

The present invention has an object to provide a control system for an automatic transmission, which is enabled to prevent the engaging shock in accordance with the occurrence of the fail state, when the vehicle is to be started during the N-D change control or the neutral control, by solving problems of the control system of the prior art. The object is achieved by the features of the claims.

The control system for an automatic transmission according to one aspect of the present invention comprises: fluid transmission unit for receiving a rotation from an engine; a speed change unit including an input clutch to be applied when a forward running range is selected, so that the rotation of the fluid transmission unit is inputted thereto when the input clutch is applied; a hydraulic control unit for establishing a plurality of gear stages in the speed change unit; first R.P.M. detection means for detecting a clutch input side R.P.M. of the input side of the input clutch; second R.P.M. detection means for detecting the clutch output side R.P.M. of the output side of the input clutch; stop state detection means for detecting the stop state of a vehicle; starting operation detection means for detecting the starting operation of the driver; and a control unit.

In this case, when the input clutch is applied, the rotation from the engine is transmitted through the fluid transmission unit to the speed change unit so that the gear stage set by the hydraulic control unit is achieved in the speed change unit.

The hydraulic control unit includes: a hydraulic servo for applying/releasing the input clutch; a control signal oil pressure generating solenoid valve for generating a control signal oil pressure; a control valve for regulating a forward running range pressure according to the control signal oil pressure to generate a control oil pressure; a change signal oil pressure generating solenoid valve for generating a change signal oil pressure; and a change-over valve adapted to be changed by the change signal oil pressure, for taking a first position, in which it feeds the forward running range pressure to the hydraulic servo, and a second position in which it feeds the control oil pressure to the hydraulic servo.

In this case, when the control signal oil pressure generating solenoid valve generates and sends the control signal oil pressure to the control valve, this control valve regulates the forward running range pressure in a manner to correspond to the control signal oil pressure thereby to generate the control oil pressure. Moreover, when the change signal oil pressure generating solenoid valve generates and sends the change signal oil pressure to the change-over valve, this change-over valve is switched to take the first position, in which it feeds the forward running range pressure to the hydraulic servo, and the second position in which it feeds the control oil pressure to the hydraulic servo.

The control unit includes: shift output generating means for generating a shift output to achieve the individual gear stages; pressure reducing means for outputting, when the stop state of the vehicle is detected by the stop state detection means, a change signal to the solenoid of the change signal oil pressure generating solenoid valve to bring the change-over valve into the second position, and a control signal to the solenoid of the control signal oil pressure generating solenoid valve to reduce the control oil pressure thereby to bring the input clutch into a predetermined released state; pressure boosting means for outputting, when the starting operation is detected by the starting operation detection means, the control signal to the solenoid of the control signal oil pressure generating solenoid valve to boost the control oil pressure thereby to bring the input clutch into a predetermined applied state, and for outputting when the input clutch comes into a predetermined applied state, the change signal to the solenoid of the change signal oil pressure generating solenoid valve to bring the change-over valve into the first position; fail decision means for deciding a fail if the clutch input/output R.P.M. difference between the R.P.M. of the input side and the R.P.M. of the output side of the input clutch is over the set value which is set on the basis of the clutch input/output R.P.M. difference when the starting operation is detected by the starting operation detection means; and fail-safe means for causing the shift output generating means to generate a shift output to a higher speed gear stage preferentially of the output of the control signal by the pressure boosting means, when the fail decision is executed by the fail decision means, to output the change signal to the solenoid of the control signal oil pressure solenoid valve thereby to bring the change-over valve into the first position.

In this case, when the stop state of the vehicle is detected by the stop state detection means, the pressure reducing means generates the change signal and the control signal to output the change signal to the solenoid of the change signal oil pressure generating solenoid valve thereby to place the change-over valve in the second position and to output the control signal to the solenoid of the control signal oil pressure generating solenoid valve thereby to reduce the control oil pressure to bring the input clutch into the predetermined released state.

Moreover, when the starting operation is detected by the starting operation detection means, the pressure boosting means outputs the control signal to the solenoid of the control signal oil pressure generating solenoid valve to boost the control oil pressure thereby to bring the input clutch into the predetermined applied state. Still moreover, when the input clutch comes into the predetermined applied state, the pressure boosting means outputs the change signal to the solenoid of the change signal oil pressure generating solenoid valve thereby to place the change-over valve in the first position.

Incidentally, when the vehicle comes into the stop state, the control oil pressure is reduced so that the input clutch comes into the predetermined released state. After this, the fail state occurs in the control valve, the control oil pressure is still low to make it difficult to start the vehicle, even if the starting operation is made by the driver. Specifically, when the starting operation is made by the driver, the control signal is outputted to the solenoid of the control signal oil pressure generating solenoid valve by the pressure boosting means. However, the fail state prevails in the control valve so that the control oil pressure cannot be boosted.

Therefore, the fail decision means makes the fail decision if the clutch input/output R.P.M. difference between the clutch input side R.P.M. and the clutch output side R.P.M. exceeds the set value which is set on the basis of the clutch input/output R.P.M. difference at the instant when the starting operation is detected by the starting operation detection means.

In case the fail state is not established and in case there is no delay in the engagement of the input clutch, for example, the engagement of the input clutch is started as the control oil pressure rises, so that the clutch input/output R.P.M. difference never fails to decrease.

In case the fail state occurs, on the contrary, the input clutch is not applied even if the engine R.P.M. is increased by the depression of the accelerator pedal, so that the clutch input/output R.P.M. difference increases.

Therefore, the present clutch input/output R.P.M. difference is compared with the clutch input/output R.P.M. difference at the instant when the starting operation is detected by the starting operation detection means. As a result, the state, in which the input clutch cannot be applied even if the engine R.P.M. rises, can be reliably detected to make the fail decision accurately.

Moreover, if the fail decision is made, the fail-safe means causes the shift output generating means to generate the shift output to a higher gear stage prior to the output of the control signal by the pressure boosting means, to output the change signal to the solenoid of the change signal oil pressure generating solenoid valve thereby to place the change-over valve in the first position.

In this case, the forward running range pressure is fed to the hydraulic servo to apply the input clutch by placing the change-over valve in the first position. However, when the shift output to the higher gear stage is generated, the torque to be outputted from the speed change unit is reduced. As a result, it is possible to reduce the engaging shock which is caused when the input clutch is applied.

The control system for an automatic transmission according to another aspect of the present invention comprises: fluid transmission unit for receiving a rotation from an engine; a speed change unit including an input clutch to be applied when a forward running range is selected, so that the rotation of the fluid transmission unit is inputted thereto when the input clutch is applied; a hydraulic control unit for establishing a plurality of gear stages in the speed change unit; first R.P.M. detection means for detecting a clutch input side R.P.M. of the input side of the input clutch; second R.P.M. detection means for detecting the clutch output side R.P.M. of the output side of the input clutch; range changing operation detection means for detecting a changing operation to a forward running range; and a control unit.

In this case, when the input clutch is applied, the rotation from the engine is transmitted through the fluid transmission unit to the speed change unit so that the gear stage set by the hydraulic control unit is achieved in the speed change unit.

Moreover, the hydraulic control unit includes: a hydraulic servo for applying/releasing the input clutch; a control signal oil pressure generating solenoid valve for generating a control signal oil pressure; a control valve for regulating a forward running range pressure according to the control signal oil pressure to generate a control oil pressure; a change signal oil pressure generating solenoid valve for generating a change signal oil pressure; and a change-over valve adapted to be changed by the change signal oil pressure, for taking a first position, in which it feeds the forward running range pressure to the hydraulic servo, and a second position in which it feeds the control oil pressure to the hydraulic servo.

In this case, when the control signal oil pressure generating solenoid valve generates and sends the control signal oil pressure to the control valve, this control valve regulates the forward running range pressure in a manner to correspond to the control signal oil pressure thereby to generate the control oil pressure. Moreover, when the change signal oil pressure generating solenoid valve generates and sends the change signal oil pressure to the change-over valve, this change-over valve is switched to take the first position, in which it feeds the forward running range pressure to the hydraulic servo, and the second position in which it feeds the control oil pressure to the hydraulic servo.

The control unit includes: shift output generating means for generating a shift output to achieve the individual gear stages; pressure boosting means for outputting, when the changing operation to the forward running range is detected by the range changing operation detection means, a change signal to the solenoid of the change signal oil pressure generating solenoid valve to bring the change-over valve into the second position, and then a control signal to the solenoid of the control signal oil pressure generating solenoid valve to boost the control oil pressure thereby to bring the input clutch into a predetermined applied state, and for outputting, when the input clutch comes into the predetermined applied state, the change signal to the solenoid of the change signal oil pressure generating solenoid valve to bring the change-over valve into the second position;

fail decision means for deciding a fail if the clutch input/output R.P.M. difference between the R.P.M. of the input side and the R.P.M. of the output side of the input clutch is over the set value which is set on the basis of the clutch input/output R.P.M. difference when the starting operation is detected by the starting operation detection means; and fail-safe means for causing the shift output generating means to generate a shift output to a higher speed gear stage preferentially of the output of the control signal by the pressure boosting means, when the fail decision is executed by the fail decision means, to output the change signal to the solenoid of the change signal oil pressure generating solenoid valve thereby to bring the change-over valve into the first position.

In this case, when the changing operation is detected by the range changing operation detection means, the pressure boosting means outputs the change signal to the solenoid of the change signal oil pressure generating solenoid valve to place the change-over valve in the second position. After this, the range changing operation detection means outputs the control signal to the solenoid of the control signal oil pressure generating solenoid valve to boost the control oil pressure thereby to bring the input clutch into the predetermined applied state. At the same time, when the input clutch comes into the predetermined applied state, the range changing operation detection means outputs the change signal to the solenoid of the change signal oil pressure generating solenoid valve thereby to place the change-over valve in the second position.

Incidentally, when the fail state occurs in the control valve before the changing operation to the forward running range, the control oil pressure is still low even if the changing operation to the forward running range is made by the driver, thereby to make it difficult to start the vehicle. Specifically, when the changing operation to the forward running range is made by the driver, the control signal is outputted to the solenoid of the control signal oil pressure generating solenoid valve by the pressure boosting means. However, the fail state prevails in the control valve so that the control oil pressure cannot be boosted.

Therefore, the fail decision means makes the fail decision if the clutch input/output R.P.M. difference between the clutch input side R.P.M. and the clutch output side R.P.M. exceeds the set value which is set on the basis of the clutch input/output R.P.M. difference at the instant when the starting operation is detected by the starting operation detection means.

Moreover, if the fail decision is made, the fail-safe means causes the shift output generating means to generate the shift output to a higher gear stage prior to the output of the control signal by the pressure boosting means, to output the change signal to the solenoid of the change signal oil pressure generating solenoid valve thereby to place the change-over valve in the first position.

In this case, the forward running range pressure is fed to the hydraulic servo to apply the input clutch by placing the change-over valve in the first position. However, when the shift output to the higher gear stage is generated, the torque to be outputted from the speed change unit is reduced. As a result, it is possible to reduce the engaging shock which is caused when the input clutch is applied.

The control system for the automatic transmission according to still another aspect of the present invention further comprises: output R.P.M. detection means for detecting the output R.P.M. of the speed change unit.

Moreover, the second R.P.M. detection means detects the clutch output side R.P.M. on the basis of the output R.P.M. and the gear ratio of the gear state which is achieved by the speed change unit. In this case, the clutch output side R.P.M. can be detected not by arranging any special sensor at the output side of the input clutch but by the existing output R.P.M. detection means arranged at the output side of the speed change unit.

In the control system for an automatic transmission according to a further aspect of the present invention, the control unit further includes engine torque control mean for generating an engine torque control signal, when the fail decision is made by the fail decision means, to reduce the torque of the engine till the end of the application of the input clutch at the shortest.

In this case, the torque of the engine is reduced till the end of the application of the input clutch at the shortest, so that the torque to be outputted from the speed change unit can be further reduced to further reduce the engaging shock which will occur when the input clutch is applied.

In the control system for an automatic transmission according to a further aspect of the present invention, the fail-safe means causes, when the fail decision is made by the fail decision means, the shift output generating means to generate a shift output to a higher gear stage prior to the output of the control signal by the pressure boosting means, and outputs the change signal, after the shift to the higher gear stage has been achieved, to the solenoid of the change signal oil pressure generating solenoid valve to bring the change-over valve into the first position.

In this case, the change signal is not outputted to the solenoid of the change signal oil pressure generating solenoid valve till the achievement of the shift to the higher gear stage so that the change-over valve is placed in the second position. In this meanwhile, therefore, the forward running range pressure is not fed to the hydraulic servo so that the input clutch is not applied. As a result, it is possible to reliably reduce the engaging shock which is caused when the input clutch is applied in accordance with the occurrence of the fail state.

In the control system for an automatic transmission according to a further aspect of the present invention, the control unit further includes pressure reduction inhibition means for inhibiting the output of the change signal and the control signal by the pressure reducing means when the fail decision is made by the fail decision means.

In this case, the output of the change signal and the control signal by the pressure reducing means is inhibited so that the neutral control is not executed later. As a result, it is possible to reliably reduce the engaging shock which is caused when the input clutch is applied.

In the control system for an automatic transmission according to a further aspect of the present invention, the control unit further includes pressure boost inhibition means for inhibiting the output of the change signal and the control signal by the pressure boosting means when the fail decision is made by the fail decision means.

In this case, the output of the change signal and the control signal by the pressure boosting means is inhibited so that the N-D control is not executed later. As a result, it is possible to reliably reduce the engaging shock which is caused when the input clutch is applied in accordance with the occurrence of the fail state.

Fig. 1 is a block diagram showing the functions of a control system for an automatic transmission according to an embodiment of the present invention;

Fig. 2 is a schematic diagram of an automatic transmission according to the embodiment of the present invention;

Fig. 3 is a diagram tabulating the operations of an automatic transmission according to the embodiment of the present invention;

Fig. 4 is a first diagram showing a hydraulic control unit according to the embodiment of the present invention;

Fig. 5 is a second diagram showing a hydraulic control unit according to the embodiment of the present invention;

Fig. 6 is a main flow chart showing the operations of the automatic transmission control unit according to the embodiment of the present invention;

Fig. 7 is a first flow chart of an N-D change control routine in the embodiment of the present invention;

Fig. 8 is a second flow chart of the N-D change control routine in the embodiment of the present invention;

Fig. 9 is a diagram illustrating a map of a relation between an input torque and a C-1 oil pressure in the embodiment of the present invention;

Fig. 10 is a diagram illustrating a map of a relation between an engine R.P.M. and a C-1 oil pressure in the embodiment of the present invention;

Fig. 11 is a diagram illustrating a map of a relation between a throttle opening and a C-1 oil pressure in the embodiment of the present invention;

Fig. 12 is a flow chart of a neutral control subroutine in the embodiment of the present invention;

Fig. 13 is a first flow chart of a first clutch release control subroutine in the embodiment of the present invention;

Fig. 14 is a second flow chart of a first clutch release control subroutine in the embodiment of the present invention;

Fig. 15 is a diagram illustrating relations between an engine R.P.M., and an input torque and a throttle pressure in the embodiment of the present invention;

Fig. 16 is a flow chart of a vehicle speed zero estimate subroutine in the embodiment of the present invention;

Fig. 17 is a first flow chart of an in-neutral control subroutine in the embodiment of the present invention;

Fig. 18 is a second flow chart of an in-neutral control subroutine in the embodiment of the present invention;

Fig. 19 is a diagram illustrating the state of a first clutch in a neutral control state in the embodiment of the present invention;

Fig. 20 is a time chart illustrating an engine R.P.M., a clutch input side R.P.M. and a C-1 oil pressure at a neutral control time in the embodiment of the present invention;

Fig. 21 is a first flow chart of a first clutch apply control subroutine in the embodiment of the present invention;

Fig. 22 is a second flow chart of a first clutch apply control subroutine in the embodiment of the present invention;

Fig. 23 is a diagram illustrating a relation between a throttle opening and a set value in the embodiment of the present invention;

Fig. 24 is a first flow chart of a first fail check subroutine in the embodiment of the present invention;

Fig. 25 is a second flow chart of a first fail check subroutine in the embodiment of the present invention;

Fig. 26 is a time chart of a first fail check subroutine in the embodiment of the present invention;

Fig. 27 is a flow chart of a second fail check subroutine;

Fig. 28 is a time chart of the second fail check subroutine;

Fig. 29 is a first flow chart of a third fail check subroutine;

Fig. 30 is a second flow chart of the third fail check subroutine;

Fig. 31 is a time chart of the third fail check subroutine; and

Fig. 32 is a time chart of an automatic transmission control unit in the embodiment of the present invention.

The present invention will be described in detail in the following in connection with its embodiments with reference to the accompanying drawings.

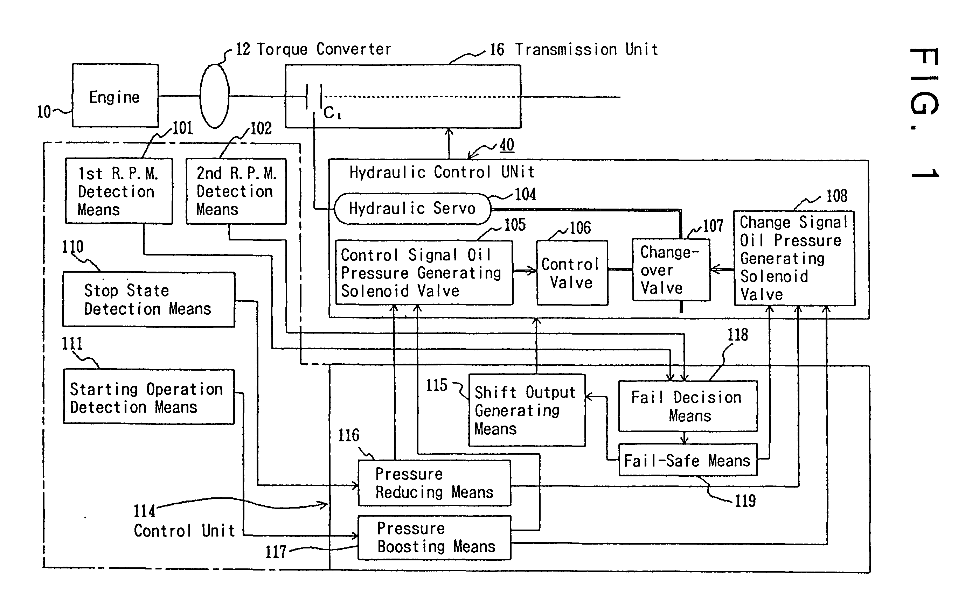

Fig. 1 is a block diagram showing the functions of a control system for an automatic transmission according to an embodiment of the present invention.

In Fig. 1, reference letter 10 designates an engine, and numeral 12 designates a torque converter acting as a fluid transmission unit for receiving a rotation transmitted from the engine 10. Numeral 16 designates a speed change unit which is equipped with an input clutch $C_I$ to be applied when a forward running range is selected, so that the rotation of the torque converter 12 is inputted to the speed change unit 16 when the input clutch $C_I$ is applied. Numeral 40 designates a hydraulic control unit for achieving a plurality of gear stages in the speed change unit 16. Numeral 101 designates first R.P.M. detection means for detecting the R.P.M. of the input side of the input clutch $C_I$. Numeral 102 designates second R.P.M. detection means for detecting the R.P.M. of the output side of the input clutch $C_I$. Numeral 110 designates stop state detection means for detecting the stop state of a vehicle. Numeral 111 designates starting operation detection means for detecting the starting operation of the driver. Numeral 114 designates a control unit.

Moreover, the hydraulic control unit 40 is constructed to include: a hydraulic servo 104 for applying/releasing the input clutch $C_I$; a control signal oil pressure generating solenoid valve 105 for generating a control signal oil pressure; a control valve 106 for regulating a forward running range pressure according to the control signal oil pressure to generate a control oil pressure; a change signal oil pressure generating solenoid valve 108 for generating a change signal oil pressure; and a change-over valve 107 adapted to be changed by said change signal oil pressure, for taking a first position, in which it feeds the forward running range pressure to the hydraulic servo, and a second position in which it feeds the control oil pressure to the hydraulic servo 104.

On the other hand, the control unit is constructed to include: shift output generating means 115 for generating a shift output to achieve the individual gear stages; pressure reducing means 116 for outputting, when the stop state of the vehicle is detected by the stop state detection means 110, a change signal to the solenoid of the change signal oil pressure generating solenoid valve 108 to bring the change-over valve 107 into the second position, and a control signal to the solenoid of the control signal oil pressure generating solenoid valve 105 to reduce the control oil pressure thereby to bring the input clutch $C_I$ into a predetermined released state; pressure boosting means 117 for outputting, when the starting operation is detected by the starting operation detection means 111, the control signal to the solenoid of the control signal oil pressure generating solenoid valve 105 to boost the control oil pressure thereby to bring the input clutch $C_I$ into a predetermined applied state, and for outputting when said input clutch $C_I$ comes into a predetermined applied state, the change signal to the solenoid of the change signal oil pressure generating solenoid valve 108 to bring the change-over valve 107 into the first position; fail decision means 118 for deciding a fail if the clutch input/output R.P.M. difference between the R.P.M. of the input side and the R.P.M. of the output side of the input clutch $C_I$ is over the set value which is set on the basis of the clutch input/output R.P.M. difference when the starting operation is detected by the starting operation detection means 111; and fail-safe means 119 for causing the shift output generating means 115 to generate a shift output to a higher speed gear stage preferentially of the output of the control signal by the pressure boosting means, when the fail decision is executed by the fail decision means 118, to output the change signal to the solenoid of the change signal oil pressure generating solenoid valve 108 thereby to bring the change-over valve 107 into the first position.

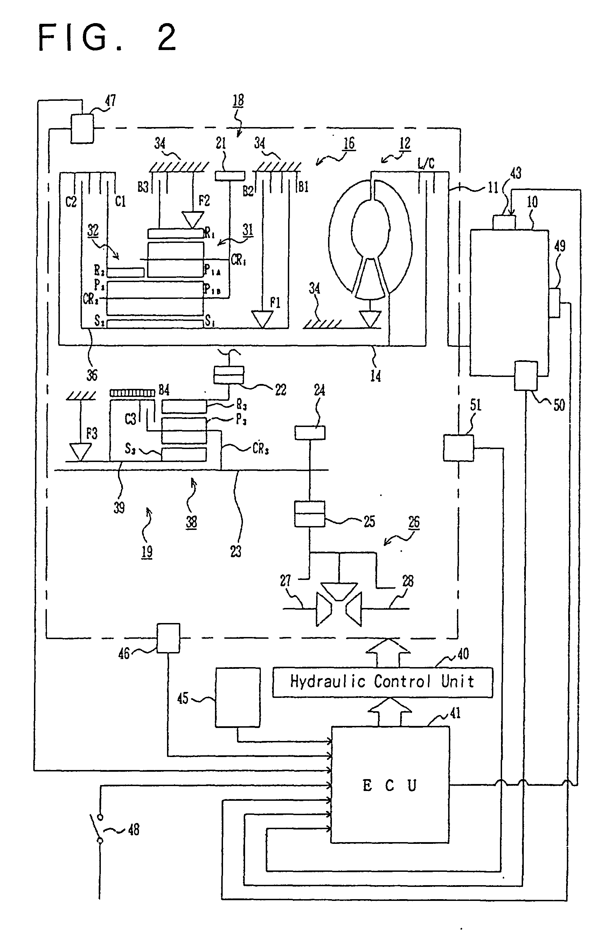

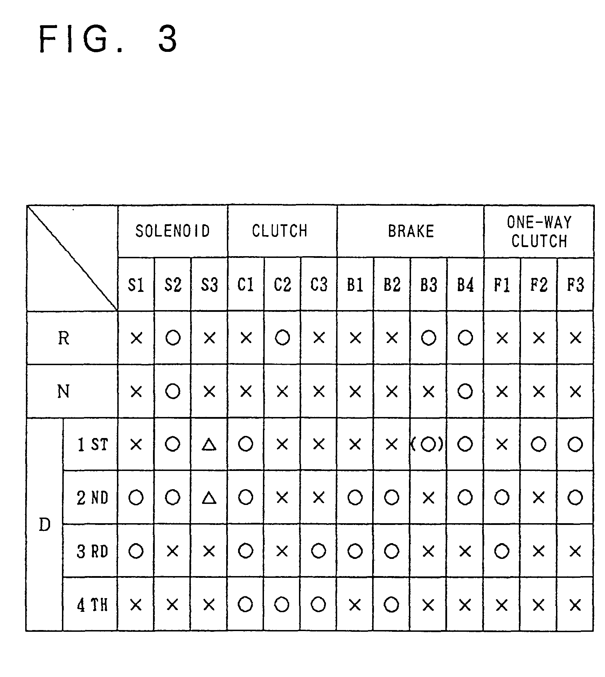

Fig. 2 is a schematic diagram of an automatic transmission according to the embodiment of the present invention, and Fig. 3 is a diagram tabulating the operations of an automatic transmission according to the embodiment of the present invention.

As shown, the rotation, as generated by the engine 10, is transmitted through an output shaft 11 to the torque converter 12. This torque converter 12 transmits the rotation of the engine 10 to an output shaft 14 through a fluid (or working oil). However, if the vehicle speed exceeds a set value, a lockup clutch L/C is applied so that the rotation can be transmitted directly to the output shaft 14.

This output shaft 14 is connected to the speed change unit 16. This speed change unit 16 is constructed of a main transmission 18 for effecting three forward and one reverse gear stages, and an underdrive auxiliary transmission 19. Moreover, the rotation of the main transmission 18 is transmitted through a counter drive gear 21 and a counter driven gear 22 to the auxiliary transmission 19, the output shaft 23 of which has its rotation transmitted through an output gear 24 and a ring gear 25 to a differential unit 26.

In this differential unit 26, the rotation, as transmitted through the output gear 24 and the ring gear 25, is differentiated so that the differential rotations are transmitted through left and right drive shafts 27 and 28 to the not-shown drive wheels.

The main transmission 18 is equipped with not only a first planetary gear unit 31 and a second planetary gear unit but also a first clutch C1, a second clutch C2, a first brake B1, a second brake B2, a third brake B3, a one-way clutch F1 and a one-way clutch F2 for transmitting the torque selectively between the individual components of the two planetary gear units 31 and 32. Incidentally, the first clutch C1 corresponds to the input clutch $C_I$ of Fig. 1.

The first planetary gear unit 31 is composed of: a ring gear $R_1$ connected to a drive unit case 34 through the third brake B3 and the one-way clutch F2, as arranged in parallel with each other; a sun gear $S_1$ formed on a sun gear 36 fitted on and rotatably supported by the output shaft 14; a carrier $CR_1$ connected to the counter drive gear 21; and pinions $P_{1A}$ and $P_{1B}$ interposed to mesh with each other between the ring gear $R_1$ and the sun gear $S_1$ and rotatably supported by the carrier $CR_1$.

Moreover, the sun gear 36 is connected through the second clutch C2 to the output shaft 14. This sun gear 36 is further connected through the first brake B1 to the drive unit case 34 and through the one-way clutch F1 and the second brake B2, as arranged in series with each other, to the drive unit case 34.

On the other hand, the second planetary gear unit 32 is composed of: a ring gear $R_2$ connected through the first clutch C1 to the output shaft 14; a sun gear $S_2$ formed on the sun gear 36 integrally with the sun gear $S_1$; a carrier $CR_2$ connected to the carrier $CR_1$; and a pinion $P_2$ interposed to mesh with the ring gear $R_2$ and the sun gear $S_2$, rotatably supported by the carrier $CR_2$ and formed integrally with the pinion $P_{1B}$.

Moreover, the counter drive gear 21 is in meshing engagement with the counter driven gear 22, as arranged in the auxiliary transmission 19, to transmit the rotation, whose speed is changed by the main transmission 18, to the auxiliary transmission 19.

This auxiliary transmission 19 is equipped with not only a third planetary gear unit 38 but also a third clutch C3, a fourth brake B4 and a one-way clutch F3 for transmitting the torque selectively between the individual components of the third planetary gear unit 38.

The third planetary gear unit 38 is composed of: a ring gear $R_3$ connected to the counter driven gear 22; a sun gear $S_3$ formed on a sun gear shaft 39 fitted rotatably on the output shaft 23; a carrier $CR_3$ fixed on the output shaft 23; and a pinion $P_3$ interposed to mesh with the ring gear $R_3$ and the sun gear $S_3$ and rotatably supported by the carrier $CR_3$.

Here will be described the operations of the automatic transmission thus constructed.

Incidentally, in Fig. 3: S1 - the first solenoid valve; S2 - the second solenoid valve; S3 - the third solenoid valve acting as the control signal oil pressure generating solenoid valve 108 (Fig. 1); C1 - the first clutch; C2 - the second clutch; C3 - the third clutch; B1 - the first brake; B2 - the second brake; B3 - the third brake; B4 - the fourth brake; and F1 to F3 - the one-way clutches. Moreover: R - an R-range; N - a neutral range (as will be called the "N-range"); D - a forward running range (as will be called the "D-range"); 1ST - a gear stage at the 1st speed; 2ND - a gear stage at the 2nd speed; 3RD - a gear stage at the 3rd speed; and 4TH - a gear stage at the 4th speed.

Moreover, symbols ○ indicate: that a first solenoid signal $S_1$, a second solenoid signal $S_2$ and a third solenoid signal $S_3$ for opening/closing the first solenoid valve S1, the second solenoid valve S2 and the third solenoid valve S3, respectively, are ON; that the first clutch C1, the second clutch C2, the third clutch C3, the first brake B1, the second brake B2, the third brake B3 and the fourth brake B4 are applied; and that the one-way clutches F1 to F3 are locked. On the other hand, symbols X indicate: that the first solenoid signal $S_1$, the second solenoid signal $S_2$ and the third solenoid signal $S_3$ for opening/closing the first solenoid valve S1, the second solenoid valve S2 and the third solenoid valve S3, respectively, are OFF; that the first clutch C1, the second clutch C2, the third clutch C3, the first brake B1, the second brake B2, the third brake B3 and the fourth brake B4 are released; and that the one-way clutches F1 to F3 are free.

Incidentally, symbols $\triangle$ indicate the ON/OFF when the neutral control state is established, and a parenthesized circle (○) indicates that the third brake B3 is applied at an engine braking time.

At the 1st speed in the D-range, the first clutch C1 and the fourth brake B4 are applied to lock the one-way clutches F2 and F3. Then, the rotation of the output shaft 14 is transmitted through the first clutch C1 to the ring gear $R_2$. In this state, the rotation of the ring gear $R_1$ is blocked by the one-way clutch F2 so that the rotation of the carrier $CR_2$ is drastically decelerated, while rotating the sun gear $S_2$ idly, and is transmitted to the counter drive gear 21.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear $R_2$, and the rotation of the sun gear $S_2$ is blocked by the second brake B2 and the one-way clutch F1. As a result, the rotation of the ring gear $R_2$ is decelerated and transmitted to the carrier $CR_2$, the rotation of which is transmitted to the counter drive gear 21 while rotating the ring gear $R_1$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear $R_2$, and the rotation of the sun gear $S_2$ is blocked by the second brake B2 and the one-way clutch F1. As a result, the rotation of the ring gear $R_2$ is decelerated and transmitted to the carrier $CR_2$ so that the rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear R3. However, the relative rotations of the carrier $CR_3$ and the sun gear $S_3$ are blocked by the third clutch C3 so that the third planetary gear unit 38 comes into a directly connected state. As a result, the rotation of the counter driven gear 22 is transmitted as it is to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear $R_2$ and through the second clutch C2 to the sun gear $S_2$ so that the first planetary gear unit 31 and the second planetary gear unit 32 come into the directly connected state. As a result, the rotation of the output shaft 11 is transmitted as it is to the counter drive gear 21.

The rotation, as transmitted from the counter drive gear 21 to the counter driven gear 22, is transmitted to the ring gear $R_3$. However, the relative rotations of the carrier $CR_3$ and the sun gear $S_3$ are blocked by the third clutch C3 so that the third planetary gear unit 38 comes into the directly connected state. As a result, the rotation of the counter driven gear 22 is transmitted-as it is to the output shaft 23.

Incidentally, the automatic transmission is arranged with a hydraulic control unit for applying/releasing the first clutch C1, the second clutch C2, the third clutch C3, the first brake B1, the second brake B2, the third brake B3 and the fourth brake B4, to establish the individual gear stages.

On the other hand, the engine 10 is arranged with an electronic control unit 43, by which the engine 10 can be controlled.

Moreover, the hydraulic control unit 40 and the electronic control unit 43 are connected with an automatic transmission control unit (ECU) 41 so that they are operated according to the control program of the automatic transmission control unit 41.

With the automatic transmission control unit 41, on the other hand, there are connected a neutral start switch (N.S.S.W.) 45, an oil temperature sensor 46, an R.P.M. sensor 47, a brake switch 48, an engine R.P.M. sensor 49, a throttle opening sensor 50 and a vehicle speed sensor 51 acting as the output R.P.M. detecting means. Incidentally, the R.P.M. sensor 47 corresponds to the first R.P.M. detecting means 101.

Thus: the shift position of the not-shown shift lever, i.e., the selected range can be detected by the neutral start switch 45; the temperature of the oil in the hydraulic control unit 40 can be detected by the oil temperature sensor 46; and the R.P.M. of the input side of the first clutch C1, i.e., the R.P.M. of the output shaft 14 (as will be called the "clutch input side R.P.M.") $N_{C1}$ can be detected by the R.P.M. sensor 47.

Moreover: whether or not the not-shown brake pedal is depressed can be detected by the brake switch 48; the engine R.P.M. $N_E$ can be detected by the engine R.P.M. sensor 49; the throttle opening θ can be detected by the throttle opening sensor 50; and the R.P.M. of the output side of the speed change unit 16 (as will be called the "output R.P.M.") No, i.e., the vehicle speed can be detected by the vehicle speed sensor 51.

Here will be described the hydraulic control unit.

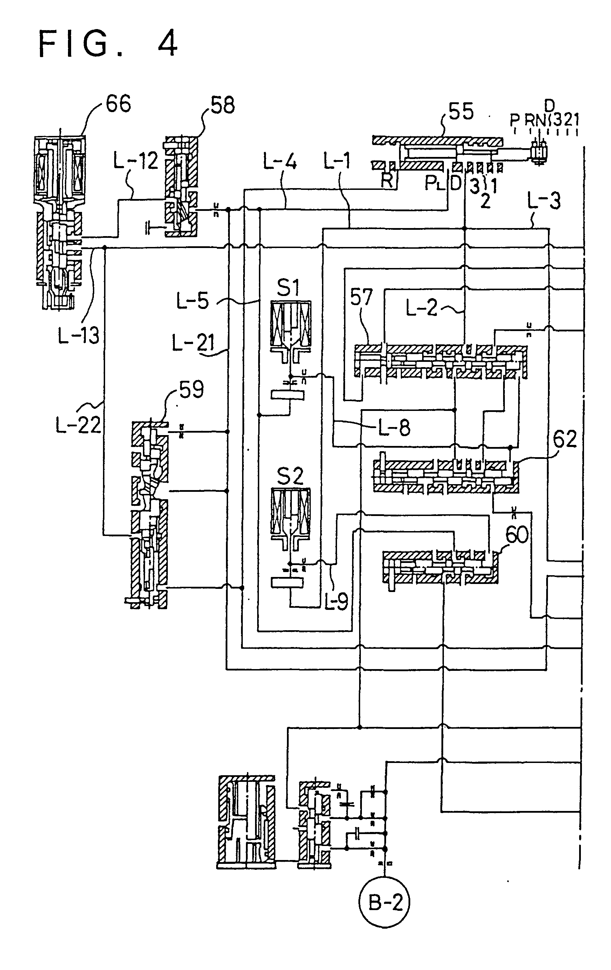

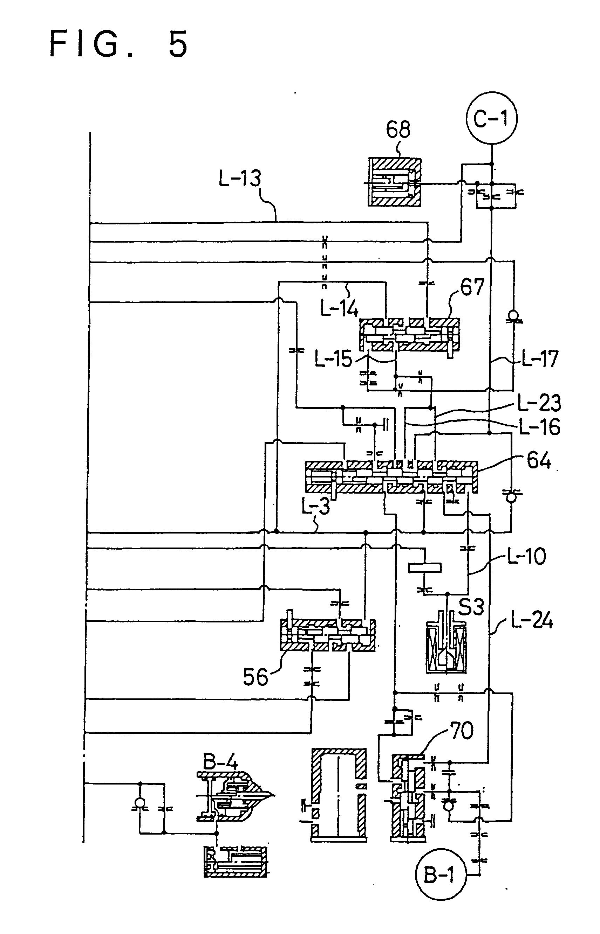

Fig. 4 is a first diagram showing a hydraulic control unit of the automatic transmission according to the embodiment of the present invention, and Fig. 5 is a second diagram showing a hydraulic control unit of the automatic transmission according to the embodiment of the present invention.

In these Figures, a primary valve 59 adjusts the oil pressure coming from the not-shown oil pressure source and outputs the adjusted oil pressure as the line pressure to a line L-21. Moreover, a manual valve 55 is provided with ports 1, 2, 3, D, $P_L$ and R so that the line pressure fed from the primary valve 59 via lines L-21 and L-4 to the port $P_L$ is generated as the 1-range pressure, the 2-range pressure, the 3-range pressure, the forward running range pressure (as will be called the "D-range pressure") and the R-range pressure, respectively, at the ports 1, 2, 3, D and R by operating the not-shown shift lever.

When the shift lever is placed in the forward drive position, the D-range oil pressure, as generated at the port D, is fed via a line L-1 to the second solenoid valve S2, via a line L-2 to a 1-2 shift valve 57 and via a line L-3 to a B-1 sequence valve 56. On the other hand, the line pressure from the primary valve 59 is fed via the line L-21 to the third solenoid valve S3.

Moreover, the line pressure from the line L-21 is fed via the line L-4 to a solenoid modulator valve 58 and further via a line L-5 to the first solenoid valve S1 and a 2-3 shift valve 60.

The first solenoid signal $S_1$, the second solenoid signal $S_2$ and the third solenoid signal $S_3$ for opening/closing the first solenoid valve S1, the second solenoid valve S2 and the third solenoid valve S3 are turned ON/OFF in response to the change signals coming from the automatic transmission control system 41 (Fig. 2), so that the first solenoid valve S1 feeds the signal oil pressure via a line L-8 to the 1-2 shift valve 57 and a 3-4 shift valve 62, the second solenoid valve S2 feeds the signal oil pressure via a line L-9 to the 2-3 shift valve 60, and the third solenoid valve S3 feeds the signal oil pressure via a line L-10 to a neutral relay valve 64. Incidentally, the third solenoid valve S3 and the neutral relay valve 64 correspond to the change signal oil pressure generating solenoid valve 108 and the change-over valve 107 of Fig. 1, respectively.

The 1-2 shift valve 57 takes an upper half position (i.e., an upper position of the spool) at the 1st speed and a lower half position (i.e., a lower position of the spool) at the 2nd to 4th speeds; the 2-3 shift valve 60 takes the lower half position at the 1st and 2nd speeds and the upper half position at the 3rd and 4th speeds; the 3-4 shift valve 62 takes the upper half position at the 1st and 4th speeds and the lower half position at the 2nd and 3rd speeds; and the neutral relay valve 64 takes the upper half position in the neutral control state and the lower half position at the 1st to 4th speeds.

The solenoid modular valve 58 is connected via a line L-12 to a linear solenoid valve 66, which is connected via a line L-13 to a C-1 control valve 67. The linear solenoid valve 66 is further connected via a line L-22 to the primary valve 59. Incidentally, the linear solenoid valve 66 and the C-1 control valve 67 correspond to the control signal oil pressure generating solenoid valve 105 and the control valve 106 of Fig. 1, respectively.

In response to the control signal from the automatic transmission hydraulic control system 41, moreover, the linear solenoid valve 66 is controlled to feed a throttle pressure $P_{TH}$ as the control signal oil pressure to the control valve 67 via the line L-13. On the other hand, the C-1 control valve 67 is fed with the D-range pressure via the lines L-3 and L-14 so that it adjusts the fed D-range pressure to an oil pressure (as will be called the "C-1 oil pressure") $P_{C1}$ of the hydraulic servo C-1, as accords to the throttle pressure $P_{TH}$ coming from the linear solenoid valve 66 and feeds the adjusted oil pressure $P_{C1}$ to a line L-15. Incidentally, the hydraulic servo C-1 corresponds to the hydraulic servo 104 of Fig. 1.

The B-1 sequence valve 56 is arranged with a spring, as located at the left end, and is formed with a control oil chamber, as located at the right end, and the spring applies its load to the spool. Moreover, the B-1 sequence valve 56 is fed at its control oil chamber with the D-range pressure via the line L-3 to take the lower half position at the 1st speed. When the oil pressure is fed at the 2nd speed to the hydraulic servo B-2 so that it rises, the B-1 sequence valve 56 is fed with the sequence pressure from the hydraulic servo B-2 so that it has its spool pushed to the right by the sequence pressure and the spring load to take the upper half position.

As a result, the oil pressure from the 1-2 shift valve 57 is fed through the B-1 sequence valve 56 to the 3-4 shift valve 62 and further through the 1-2 shift valve 57 and the neutral relay valve 64 to a hydraulic servo B-1. Thus, the hydraulic servo B-1 is fed with the oil pressure according to the rise of the oil pressure in the hydraulic servo B-2.

Incidentally, the neutral relay valve 64 takes the upper half position when in the neutral control state. In this neutral control state, therefore, the C-1 oil pressure $P_{C1}$, as generated in the line L-15, is fed through a line L-16, the neutral relay valve 64 and a line L-17 to the hydraulic servo C-1. Moreover, the oil under the C-1 oil pressure $P_{C1}$ is fed via lines L-23 and L-24 to a B-1 control valve 70.

Moreover, the neutral relay valve 64 takes the lower half position at the 1st to 4th speeds. At the 1st to 4th speeds, therefore, the oil under the D-range pressure is fed through the line L-3, the neutral relay valve 64 and the line L-17 to the hydraulic servo C-1. In the neutral control state, on the other hand, the neutral relay valve 64 is switched to the upper half position to connect the line L-16 and the line L-17.

Incidentally, numeral 68 designates a damper valve which is arranged in the line L-17 for smoothing the discharge of the oil from the hydraulic servo C-1, and characters B-4 a hydraulic servo of the fourth brake B4.

Here will be described the operations of the automatic transmission control unit at the time of the N-D change.

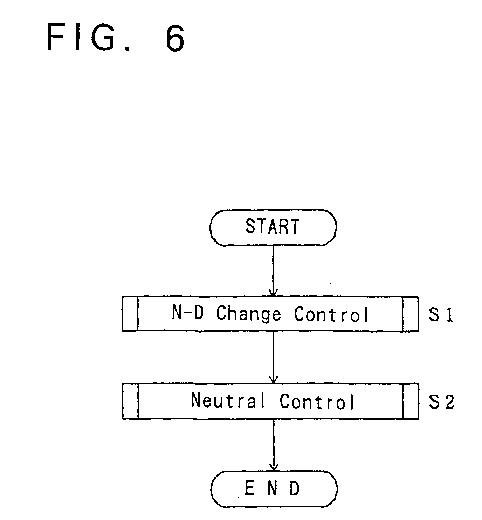

Fig. 6 is a main flow chart showing the operations of the automatic transmission control unit according to the embodiment of the present invention.

In this case, simultaneously as the ignition of the engine 10 (Fig. 2) is turned ON, the main flow is started to repeat the N-D change control and the neutral control till the ignition is turned OFF.

Step S1: The N-D change control is executed.

Step S2: The neutral control is executed.

Here will be described the N-D change control subroutine of Step S1 of Fig. 6.

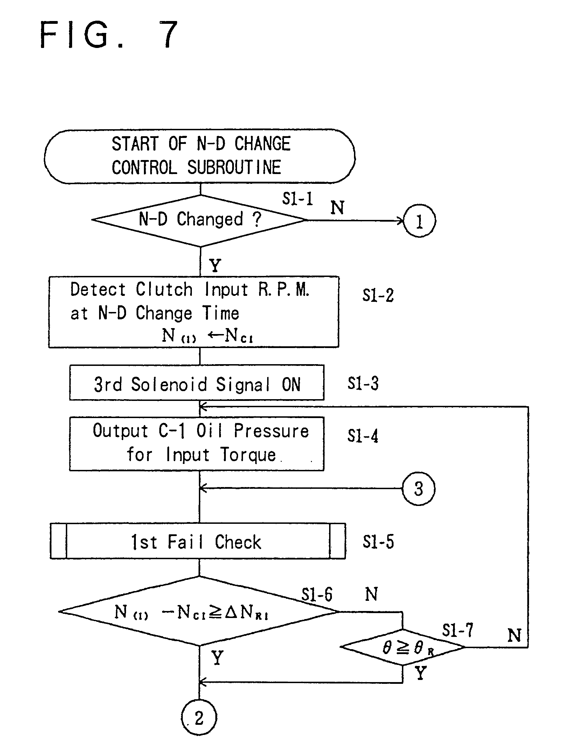

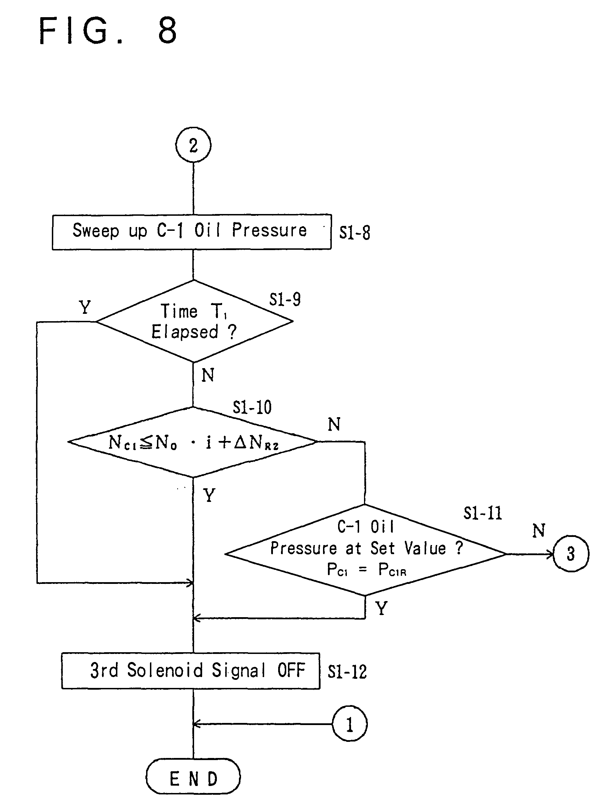

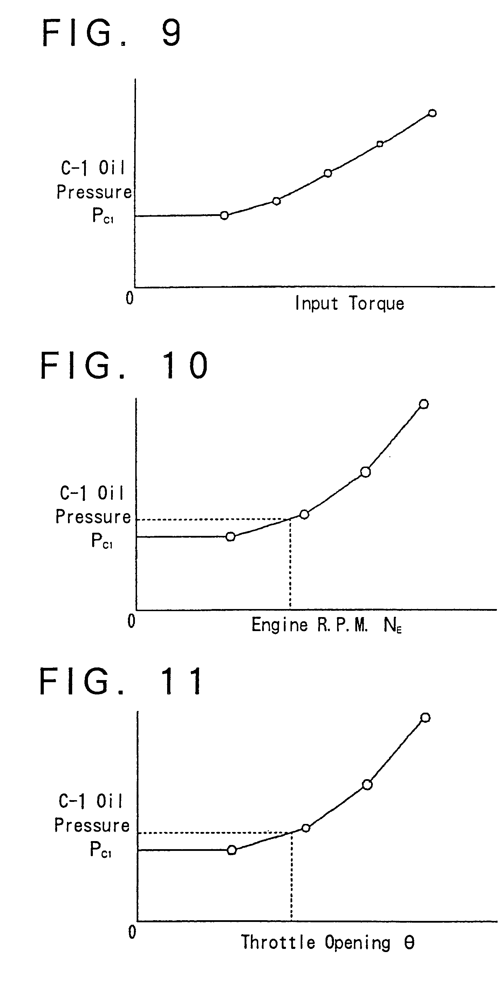

Fig. 7 is a first flow chart of the N-D change control routine in the embodiment of the present invention; Fig. 8 is a second flow chart of the N-D change control routine in the embodiment of the present invention; Fig. 9 is a diagram illustrating a map of a relation between an input torque and a C-1 oil pressure in the embodiment of the present invention; Fig. 10 is a diagram illustrating a map of a relation between an engine R.P.M. and the C-1 oil pressure in the embodiment of the present invention; and Fig. 11 is a diagram illustrating a map of a relation between a throttle opening and the C-1 oil pressure in the embodiment of the present invention. Incidentally: Fig. 9 plots the C-1 oil pressure $P_{C1}$ against the input torque; Fig. 10 plots the C-1 oil pressure $P_{C1}$ against the engine R.P.M. $N_E$; and Fig. 11 plots the C-1 oil pressure $P_{C1}$ against the throttle opening θ.

Step S1-1: The not-shown range changing operation detection means decides, on the basis of the signal from the neutral start switch 45 (Fig. 2), whether or not the N-D change has been made by the starting operation of the driver. Simultaneously with this, the timing operation by the guard timer is started. The N-D change control subroutine advances to Step S1-2, if the N-D change has been made, but is ended if NOT.

Step S1-2: The clutch input side R.P.M. $N_{C1}$ at the N-D change time is detected and set as a value $N_{(1)}$.

Step S1-3: The third solenoid signal $S_3$ for opening/closing the third solenoid valve S3 is turned ON. The third solenoid signal $S_3$ is outputted as the change signal from the automatic transmission control system 41.

Step S1-4: The C-1 oil pressure $P_{C1}$ according to the input torque is outputted with reference to the map of Fig. 9. On the other hand, the oil pressure $P_{C1}$ is outputted at the idling ON time with reference to the map of Fig. 10 and at the idling OFF time with reference to the map of Fig. 11.

Step S1-5: A first fail check is executed. If the hydraulic control unit 40 (Fig. 1) has its C-1 control valve 67 (Fig. 5) caused to stick for some reason, there may arise the fail state in which the C-1 oil pressure $P_{C1}$ is not generated in the C-1 control valve 67. In this case, the third solenoid signal $S_3$ is turned OFF to switch the neutral relay valve 64 thereby to interrupt the N-D change control, and the 4th speed shift output is generated as the shift output to a higher gear stage so that the D-range pressure is fed to the hydraulic servo C-1 to apply the first clutch C1.

Step S1-5: The clutch input side R.P.M. $N_{C1}$ at that time is detected, and it is decided whether or not the subtraction $(N_{(1)} - N_{C1})$ of the clutch input side R.P.M. $N_{C1}$ from the value $N_{(1)}$ exceeds a set value $\Delta N_{R1}$. The subroutine advances to Step S1-8, if the value $(N_{(1)} - N_{C1})$ is over the set value $\Delta N_{R1}$, but to Step S1-7 if the value $(N_{(1)} - N_{C1})$ is below the set value $\Delta N_{R1}$.

Step S1-7: It is decided whether or not the throttle opening θ is over a set value $θ_R$. The subroutine advances to Step S1-8, if the throttle opening θ is over the set value $θ_R$, but returns to Step S1-4 if the throttle opening θ is below the set value $θ_R$.

The set value $\Delta N_{R1}$ is set to the value at which the first clutch C1 starts its application (or engagement) after the not-shown piston of the hydraulic servo C-1 has reached the piston stroke end, and the set value $θ_R$ is set to the value which implies that the driver intends to start.

Thus, in the state when the first clutch C1 does not yet start to engage, the subroutine advances to Step S1-7 when the not-shown accelerator pedal is depressed to increase the throttle opening 6 .

Step S1-8: The C-1 oil pressure $P_{C1}$ is swept up. In this case, the C-1 oil pressure $P_{C1}$ is boosted by changing the control signal oil pressure coming from the linear solenoid valve 66 (Fig. 4). After this, the C-1 oil pressure $P_{C1}$ is boosted by set pressures $\Delta P$ at every short time period $\Delta t$, to continue the engagement of the first clutch C1.

Step S1-9: It is decided whether or not a time period $T_1$ measured by the guard timer has elapsed. The subroutine advances to Step S1-12, if the time period $T_1$ has elapsed, but to Step S1-10 if NOT.

Step S1-10: It is decided on the basis of the output R.P.M. $N_o$ of the speed change unit 16 whether or not the engagement of the first clutch C1 has ended. In this case, if the speed change unit 16 has a gear ratio i, it is estimated that the R.P.M. of the output side of the first clutch C1 is No· i. Hence, it is decided whether or not the clutch input side R.P.M. $N_{C1}$ is below the sum of the output side R.P.M. No· i and a set value $\Delta N_{R2}$, as defined in the following:

$$N_{C1} \leqq No \cdot i + \Delta N_{R2}.$$

In short, the end of the application is decided if the inequality holds. The subroutine advances to Step S1-12, if the engagement of the first clutch C1 ends, but to S1-11 if NOT.

Step S1-11: It is decided whether or not the C-1 oil pressure $P_{C1}$ has reached a set value $P_{C1R}$. The subroutine advances to Step S1-12, if the C-1 oil pressure $P_{C1}$ has reached the set value $P_{C1R}$, but returns to Step S1-5, if NOT.

Step S1-12: The third solenoid signal $S_3$ is turned OFF.

Thus, in the case of the N-D change, the third solenoid signal $S_3$ for opening/closing the third solenoid valve S3 is turned ON to feed the hydraulic servo C-1 with the C-1 oil pressure $P_{C1}$ corresponding to the input torque. Then, the engagement of the first clutch C1 is started. Moreover, as the clutch input side R.P.M. $N_{C1}$ becomes smaller, the driver depresses the not-shown accelerator pedal to enlarge the throttle opening θ. Then, the C-1 oil pressure $P_{C1}$ is gradually boosted.

Moreover, when the engagement of the first clutch C1 is ended, the third solenoid signal $S_3$ is turned OFF to start the vehicle.

When the change operation to the D-range is thus detected, the neutral relay valve 64 and the C-1 control valve 67 are controlled by the pressure boosting means 117 (Fig. 1) so that the input clutch is brought into a predetermined engagement state.

Here will be described the neutral control subroutine of Step S2 of Fig. 6.

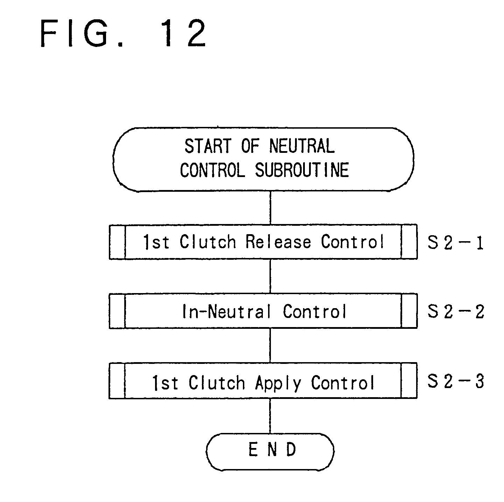

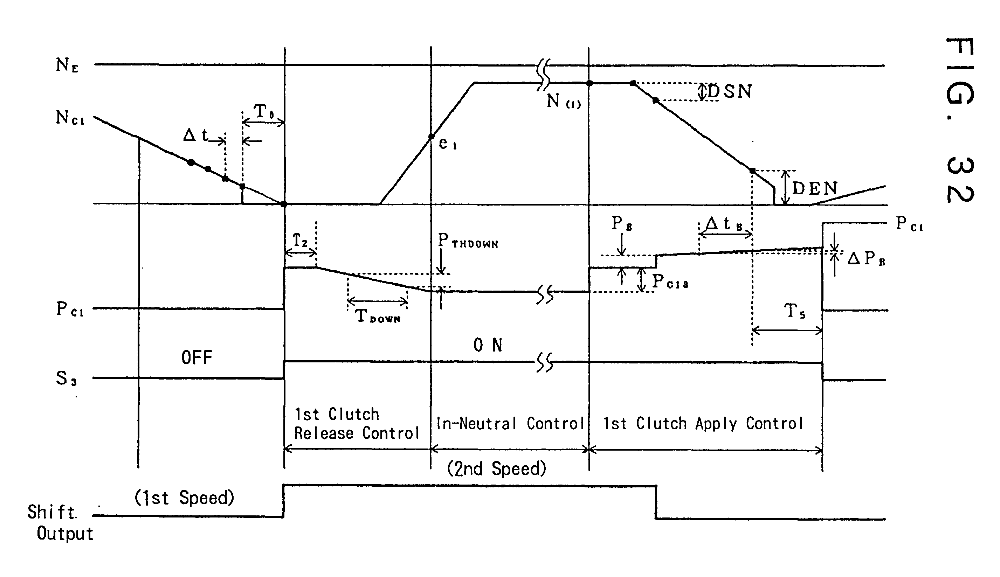

Fig. 12 is a flow chart of a neutral control subroutine in the embodiment of the present invention, and Fig. 32 is a time chart of an automatic transmission control unit in the embodiment of the present invention. Incidentally, Fig. 32 is used together for describing the later individual subroutines.

Step S2-1: The first clutch release control is executed. In this case, the vehicle speed zero is estimated, and the 2nd speed shift output is generated at a set timing to start the engagements of the second brake B2 (Fig. 2) and the third brake B3 to effect the hill-hold control thereby to sweep down the C-1 oil pressure $P_{C1}$ at a set timing.

For these operations, the engine R.P.M. $N_E$ corresponding to the input torque is determined, and the C-1 oil pressure $P_{C1}$ corresponding to the engine R.P.M. $N_E$ is outputted and is then gradually reduced.

Incidentally, the input torque can be detected not only from the engine R.P.M. $N_E$ but also indirectly from the engine air intake, the fuel injection rate and so on. Moreover, the input torque of the speed change unit 16 can also be directly detected by the not-shown torque sensor. In this case, moreover, this torque sensor is attached to the output shaft 14 of the torque converter 12.

Step S2-2: The in-neutral control is executed to establish the neutral control state. In this case, the stabilizations of the engine R.P.M. $N_E$ and the clutch input side R.P.M. $N_{C1}$ are awaited. The C-1 oil pressure $P_{C1}$ is boosted or reduced by set pressures on the basis of those engine R.P.M. $N_E$ and clutch input side R.P.M. $N_{C1}$ stabilized.

Step S2-3: The starting operation detection means 111 (Fig. 1) executes the first clutch apply control. In this case, the C-1 oil pressure $P_{C1}$ is boosted by the set values which are set on the basis of the throttle opening θ, the engine R.P.M. $N_E$ and so on, to end the movement of the piston of the hydraulic servo C-1 (Fig. 5) in the piston stroke. After the end of the piston movement in the piston stroke of the hydraulic servo C-1, the C-1 oil pressure $P_{C1}$ is boosted by the set pressures to prevent the application shock.

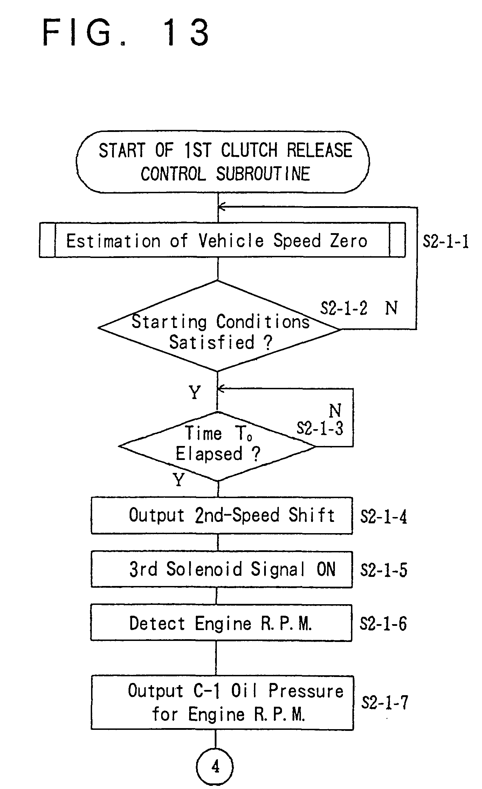

Here will be described the subroutine of the first clutch release control at the Step S2-1 of Fig. 12 with reference to Figs. 13 to 15.

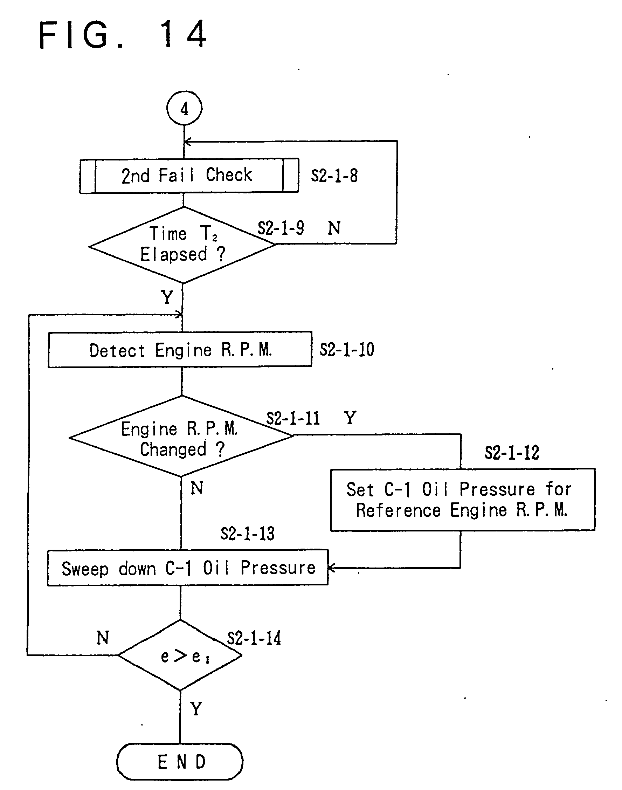

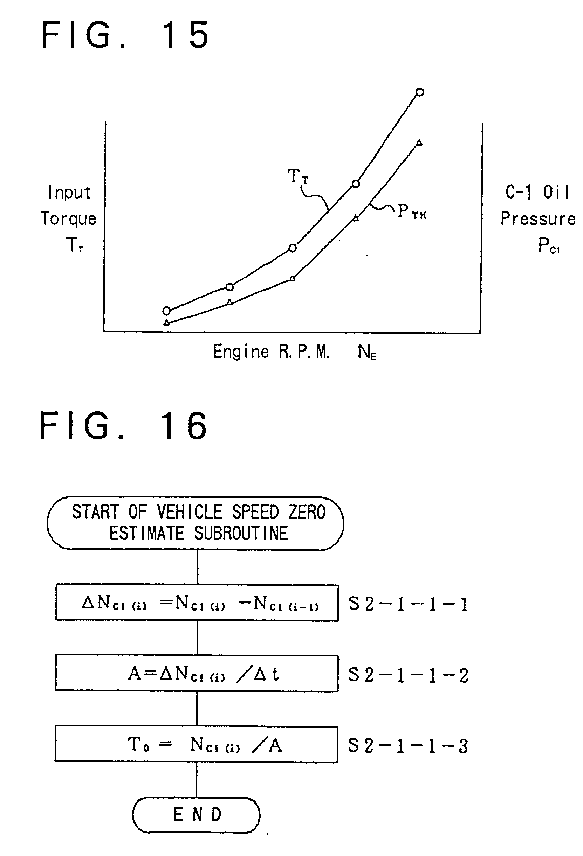

Fig. 13 is a first flow chart of a first clutch release control subroutine in the embodiment of the present invention; Fig. 14 is a second flow chart of a first clutch release control subroutine in the embodiment of the present invention; and Fig. 15 is a diagram illustrating relations between an engine R.P.M., and an input torque and a throttle pressure in the embodiment of the present invention. Incidentally, Fig. 15 plots the input torque $T_T$ (= $t \cdot C \cdot N_E^2$) [Kg· m] and the C-1 oil pressure $P_{C10}$ against the engine R.P.M. $N_E$.

Step S2-1-1: The stop state detection means 110 (Fig. 1) executes the vehicle speed zero estimation on the basis of the clutch input side R.P.M. $N_{C1}$.

Step S2-1-2: The stop state detection means waits that the neutral control starting conditions are satisfied. Simultaneously with this, the timing operation of the not-shown first timer is started.

In this case, the satisfaction of the starting conditions is decided if all the following conditions are satisfied: the clutch input side R.P.M. $N_{C1}$ is substantially 0; the not-shown accelerator pedal is released so that the throttle opening θ is below a predetermined value; the oil temperature detected by the oil temperature sensor 46 (Fig. 2) is over a predetermined value; and the not-shown brake pedal is depressed to turn ON the brake switch 48. Incidentally, whether or not the clutch input side R.P.M. $N_{C1}$ is substantially 0 is decided depending upon whether or not the detection limit of the R.P.M. sensor 47 is detected. In the present embodiment, it is decided that the detection limit is detected, if the actual vehicle speed reaches a set value (2 [km/h]).

Step S2-1-3: The stop state detection means awaits the lapse of the time period $T_o$ measured by the first timer, and the subroutine advances to Step S2-1-4 if the time period $T_o$ elapses. Here, this time period $T_o$ is calculated by the vehicle speed zero estimation, and it is estimated that the vehicle speed is 0 when the time period $T_o$ elapses.

Step S2-1-4: The shift output generating means 115 (Fig. 1) outputs the 2nd speed shift output for starting the hill-hold control to turn ON the first solenoid signal $S_1$ for opening/closing the first solenoid valve S1 (Fig. 4) so that the oil pressure is fed to apply the hydraulic servo B-2. In accordance with the rise of the oil pressure in the hydraulic servo B-2, moreover, the sequence pressure in the hydraulic servo B-2 is fed to the B-1 sequence valve 56 (Fig. 5) so that the oil pressure is fed to apply the hydraulic servo B-1.

Thus, the hill hold control is executed to establish the 2nd speed gear stage in the speed change unit 16 so that the first clutch C1, the first brake B1, the second brake B2 and the fourth brake B4 are applied to lock the one-way clutches F1 and F3. In this state, if the vehicle is about to run backward uphill, the backward rotation is transmitted to the output shaft 23 of the auxiliary transmission 19 to rotate the ring gear $R_1$ forward. However, this rotation is blocked by the one-way clutch F2 so that the vehicle will not run backward.

Step S2-1-5: The third solenoid signal $S_3$ is turned ON to switch the neutral relay valve 64 to the upper half position thereby to bring the C-1 oil pressure $P_{C1}$ into a controllable state.

Step S2-1-6: The engine R.P.M. $N_E$ corresponding to the input torque $T_T$ is detected, as shown in Fig. 15, to set a reference engine R.P.M. $N_{Em}$ with the engine R.P.M. $N_E$.

Step S2-1-7: In a manner to correspond to the engine R.P.M. $N_E$, there is generated the C-1 oil pressure $P_{C1}$ just before the first clutch C1 is released.

Step S2-1-8: When the second fail check is executed to effect the fail decision, the neutral control is interrupted, and the 1st speed shift output is generated to feed the D-range pressure to the hydraulic servo C-1 thereby to apply the first clutch C1. Simultaneously with this, the timing operation of the timer is started.

Step S2-1-9: It is decided whether or not the time period $T_2$ by the timing operation of the timer has elapsed. The subroutine advances to Step S2-1-10, if the time period $T_2$ has elapsed, but returns to Step S2-1-8 if NOT.

Step S2-1-10: The engine R.P.M. $N_E$ corresponding to the input torque $T_T$ is detected again.

Step S2-1-11: It is decided whether or not the engine R.P.M. $N_E$ has changed, as compared with the reference engine R.P.M. $N_{Em}$. The subroutine advances to Step S2-1-12, if the answer is YES, but to Step S2-1-13 if NOT.

Step S2-1-12: The reference engine R.P.M. $N_{Em}$ is set with the value of the engine R.P.M. $N_E$ at the instant when it is decided at Step S2-1-11 that the engine R.P.M. $N_E$ has changed with respect to the reference engine R.P.M. $N_{Em}$, and the C-1 oil pressure $P_{C1}$ is changed to the C-1 oil pressure $P_{C1}$ corresponding to the new reference engine R.P.M. $N_{Em}$.

Step S2-1-13: The pressure reducing means 116 (Fig. 1) reduces (or sweeps down) the C-1 oil pressure $P_{C1}$, by set pressures $P_{THDOWN}$ at each lapse of a set time period $T_{DOWN}$, as expressed by the following Equation:

$$P_{TH} = P_{TH} \ P_{THDOWN}.$$

Step S2-1-14: After the release state of the first clutch C1 has been established, the pressure reduction of Step S2-1-13 is continued till the speed ratio e (= $N_{C1}/N_E$) exceeds a constant $e_1$. This pressure reduction of Step S2-1-13 is interrupted when the gear ratio e exceeds the constant $e_1$. This constant $e_1$ is set to 0.75, for example, while considering the delay of the change of the clutch input side R.P.M. $N_{C1}$ for the manipulation of the oil pressure when the first clutch C1 is released. Incidentally, the speed ratio e may be replaced by the clutch input side R.P.M. $N_{C1}$.

Incidentally, if the applied state of the first clutch C1 is detected by deciding whether or not a differential rotation $\Delta N$ has changed, this differential rotation $\Delta N$ will not change no matter whether the first clutch C1 might be completely applied or released. As a result, it is difficult to differentiate the state, in which the first clutch C1 is completely applied, and the state in which the first clutch C1 is released.

Therefore, the state just before the application of the first clutch C1 is started can be restored without fail by awaiting that the speed ratio e overcomes the constant $e_1$.

Here will be described the subroutine of the vehicle speed zero estimation of Step S2-1-1 of Fig. 13.

Fig. 16 is a flow chart of a vehicle speed zero estimate subroutine in the embodiment of the present invention.

Step S2-1-1-1: The R.P.M. difference $\Delta N_{C1(i)}$ is calculated by subtracting a clutch input side R.P.M. $N_{C1(i-1)}$ of a time period $\Delta t$ before from a clutch input side R.P.M. $N_{C1(i)}$ of the present time. In this case, the time period $\Delta t$ is set by the clock in the automatic transmission control unit 41 (Fig. 2) so that the clutch input side R.P.M. $N_{C1}$ is detected every time periods $\Delta t$.

Step S2-1-1-2: A deceleration A of the vehicle is calculated by dividing the R.P.M. difference $\Delta N_{C1(i)}$ by the time period $\Delta t$.

Step S2-1-1-3: The time period $T_o$ till the stop of the vehicle is calculated by dividing the present clutch input side R.P.M. $N_{C1(i)}$ by the deceleration A.

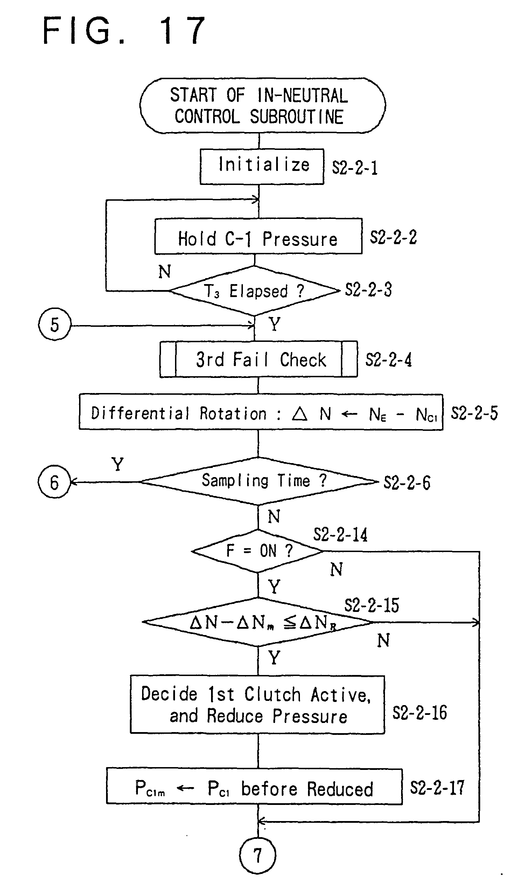

Here will be described the subroutine of the in-neutral control of Step S2-2 of Fig. 12 with reference to Figs. 17 to 20.

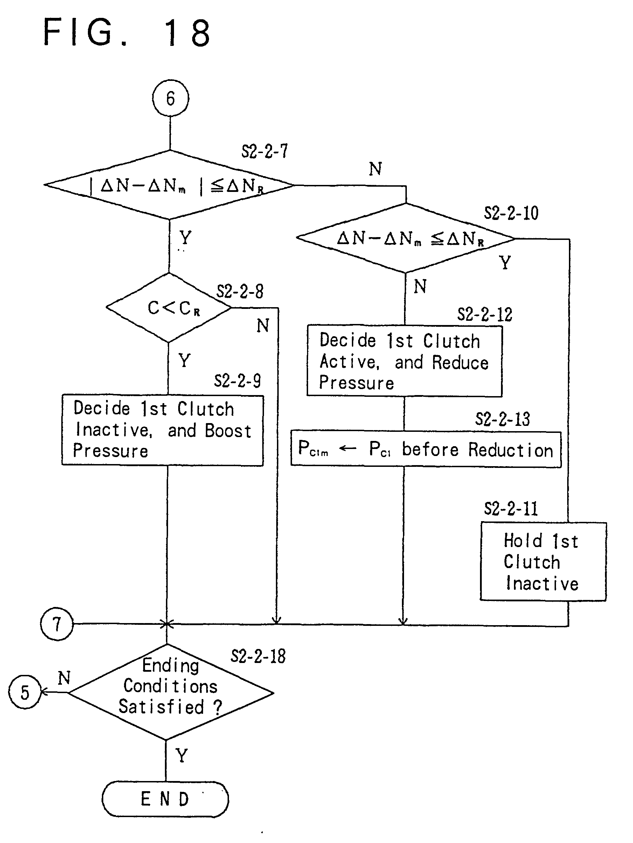

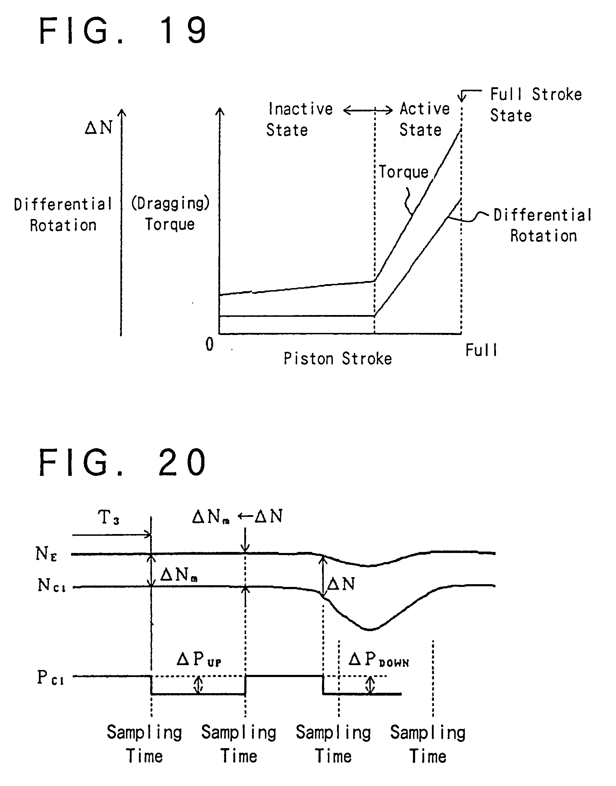

Fig. 17 is a first flow chart of an in-neutral control subroutine in the embodiment of the present invention; Fig. 18 is a second flow chart of an in-neutral control subroutine in the embodiment of the present invention; Fig. 19 is a diagram illustrating the state of a first clutch in a neutral control state in the embodiment of the present invention; and Fig. 20 is a time chart illustrating an engine R.P.M., a clutch input side R.P.M. and a C-1 oil pressure at a neutral control time in the embodiment of the present invention. Incidentally, Fig. 19 plots the differential rotation $\Delta N$ and the (dragging) torque against the piston stroke.

Step S2-2-1: An oil pressure control flag F, the counted value C of the not-shown counter, and the reference R. P.M. difference $\Delta N_m$ are set to the following initial values:

$$F \leftarrow Off;$$

$$C \leftarrow O;$$

and

$$\Delta N_m \leftarrow \text{the value } (N_E - N_{C1}) \text{ at that time.}$$

Steps S2-2-2 and S2-2-3: The C-1 oil pressure $P_{C1}$ is held at the final value of the first clutch release control. After it has been confirmed that the first clutch C1 was released to a predetermined state, a decision is promptly started as to whether the differential rotation $\Delta N$ has been changed. Then, this decision may be mistaken by the change in the differential rotation $\Delta N$ due to the pressure reduction in the first clutch release control. Therefore, the not-shown second timer is used to continue the holding of the C-1 oil pressure $P_{C1}$ till the time period $T_2$ elapses. As a result, the decision upon whether or not the differential rotation $\Delta N$ has been changed can be postponed to prevent the C-1 oil pressure $P_{C1}$ from being controlled in the unstable state just after the first clutch C1 has been released. When the time period $T_3$ elapses, the subroutine advances to Step S2-2-4.

Step S2-2-4: When the third fail check is executed to effect the fail decision, the neutral control is interrupted to generate the 4th speed shift output so that the D-range pressure is fed to the hydraulic servo C-1 to apply the first clutch C1.

Step S2-2-5: The differential rotation $\Delta N$ between the engine R.P.M. $N_E$ and the clutch input side R.P.M. $N_{C1}$ is calculated.

Step S2-2-6: It is decided whether or not a preset sampling time is reached, that is, whether or not a time period 1.0 [sec] or 0.5 [sec] has elapsed. The subroutine advances to Step S2-2-7, if the sampling time is reached, but to Step S2-2-14 if NOT.

Step S2-2-7: It is decided whether or not the absolute value of the difference between the differential rotation $\Delta N$ and the reference differential rotation $\Delta N_m$ is below a set value $\Delta N_R$, that is, whether or not the change in the differential rotation $\Delta N$ is below the set value $\Delta N_R$. The subroutine advances to Step S2-2-8, if below the set value $\Delta N_R$, but to Step S2-2-10 if over the set value $\Delta N_R$. This set value $\Delta N_R$ is set in advance to discriminate the active state and the inactive state of the first clutch C1, as shown in Fig. 19.

Incidentally, in case the differential rotation $\Delta N$ is to be calculated, it may be erroneously decided to have changed, if the engine R.P.M. $N_E$ and the clutch input side R.P.M. $N_{C1}$ are erroneously detected by the engine R.P.M. sensor 49 (Fig. 2) and the R.P.M. sensor 47, or if the calculations are mistaken. Noting that the differential rotation $\Delta N$ is abruptly changed if the application of the first clutch C1 is started from a premature state, therefore, the erroneous decision of the change in the differential rotation $\Delta N$ can be prevented by deciding the change of the differential rotation $\Delta N$ if the change in the differential rotation $\Delta N$ exceeds the set value $\Delta N_R$.

Moreover, if this set value $\Delta N_R$ is varied according to the oil temperature, the C-1 oil pressure $P_{C1}$ can be properly controlled from the low to high temperature states of the oil.

Step S2-2-8: It is decided whether or not the counted value C of the not-shown counter is below a set value $C_R$. The subroutine advances to Step S2-2-9, if below the set value $C_R$, but to Step S2-2-18 if over the set value $C_R$.

Step S2-2-9: The pressure boosting means 117 (Fig. 1) decides that the first clutch C1 is inactive, because of no change in the differential rotation $\Delta N$. In this state, the piston may have excessively returned, the C-1 oil pressure $P_{C1}$ is boosted, as shown in Fig. 20, by a set pressure $\Delta P_{UP}$, as follows:

$$P_{C1} \leftarrow P_{C1} + \Delta P_{UP}.$$

Moreover, the reference differential rotation $\Delta N_m$ is set with the differential rotation $\Delta N$, and the oil pressure control flag F is turned ON:

$$\Delta N_m \leftarrow \Delta N;$$

and

$$F \leftarrow ON.$$

Step S2-2-10: It is decided whether or not the change in the differential rotation $\Delta N$ has a tendency to decrease, that is, whether or not the difference of the differential rotation $\Delta N$ from the reference differential rotation $\Delta N_m$ is below the set value $\Delta N_R$. The subroutine advances to Step S2-2-11, if below the set value $\Delta N_R$, but to Step S2-2-12 if over the set value $\Delta N_R$.

Step S2-2-11: Since the first clutch C1 can be decided to be in the course from the active state to the inactive state, the C-1 oil pressure $P_{C1}$ is held at the value of that time, and the oil pressure control flag F is turned OFF:

$$F \leftarrow OFF.$$

Specifically, even if the differential rotation $\Delta N$

is changed, this change is in the direction to decrease in case the first clutch C1 is transferring from the active state to the inactive state. At this time, if the C-1 oil pressure $P_{C1}$ is further reduced, the piston may abruptly move back to establish an excessive loss stroke. Therefore, the reduction of the C-1 oil pressure $P_{C1}$ is once inhibited and held at the value of that time in case the first clutch C1 is transferring from the active to the inactive state.

Step S2-2-12: The pressure reducing means 116 reduces the C-1 oil pressure $P_{C1}$ by a set pressure $\Delta P_{DOWN}$ because the first clutch C1 can be decided to be in the course from the inactive to active states, as follows:

$$P_{C1} \leftarrow P_{C1} - \Delta P_{DOWN}.$$

Moreover, the reference differential rotation $\Delta N_m$ is set with the differential rotation $\Delta N$, and the oil pressure control flag F is turned OFF whereas the value "1" is subtracted from the counted value of the counter:

$$\Delta N_m \leftarrow \Delta N;$$

$$F - OFF;$$

and

$$C \leftarrow C - 1 \text{ (or } C = 0 \text{ for } C < 0).$$

Step S2-2-13: The C-1 oil pressure $P_{C1}$, before reduced at Step S2-2-11, is set as a reference C-1 oil pressure $P_{C1m}$ and stored in the not-shown storage unit:

$$P_{C1m} \leftarrow P_{C1} \text{ before reduced.}$$

Step S2-2-14: It is decided whether or not the oil pressure control flag F is ON, that is, whether or not the C-1 oil pressure $P_{C1}$ is boosted at a previous sampling instant. The subroutine advances to Step S2-2-15, if the oil pressure control flag F is ON, but to Step S2-2-18 if OFF.

Step S2-2-15: It is decided whether or not the difference of the differential rotation $\Delta N$ from the reference differential rotation $\Delta N_m$ is below the set value $\Delta N_R$, because the C-1 oil pressure $P_{C1}$ is boosted at the previous sampling instant. The subroutine advances to Step S2-2-16, if below he set value $\Delta N_R$, but to Step S2-2-18 if over the set value $\Delta N_R$.

Step S2-2-16: The differential rotation $\Delta N$ is changed by boosting the C-1 oil pressure $P_{C1}$ at the previous sampling instant. As a result, it is decided that the first clutch C1 is in the active state, and the C-1 oil pressure $P_{C1}$ is reduced by the set pressure $\Delta P_{DOWN}$:

$$P_{C1} \leftarrow P_{C1} - \Delta P_{DOWN}.$$

Moreover, the reference differential rotation $\Delta N_m$ is set with the differential rotation $\Delta N$, and the oil pressure control flag F is turned OFF whereas the value "1" is added to the counted value of the counter, as follows:

$$\Delta N_m \leftarrow \Delta N;$$

$$F \leftarrow OFF;$$

and

$$C \leftarrow C + 1.$$

As described before, it is decided whether or not the differential rotation $\Delta N$ has been changed at each sampling instant. In case the C-1 oil pressure $P_{C1}$ is boosted according to the decision, the application of the first clutch C1 may be instantly started, but the first clutch C1 may be released. Then, the idle vibration may be generated if the torque transmission is started. Therefore, in case the differential rotation $\Delta N$ is changed to increase while the application of the first clutch C1 is being started, the C-1 oil pressure $P_{C1}$ is reduced without awaiting the subsequent sampling instant. Thus, the first clutch C1 can be prevented from being released to prevent the idle vibration.

Moreover, the C-1 oil pressure $P_{C1}$ is changed on in case the change in the differential rotation $\Delta N$ is higher than the set value $\Delta N_R$ at each sampling instant, as described before. In this case, the differential rotation changes little by little, the C-1 oil pressure $P_{C1}$ may not be changed despite the first clutch C1 has transferred to the applied state. Therefore, the reference differential rotation $\Delta N_m$ is updated only when the C-1 oil pressure $P_{C1}$ is changed. As a result, the change of the C-1 oil pressure $P_{C1}$ can be ensured, in case the differential rotation $\Delta N$ is changed little by little so that the first clutch C1 is transferring to the applied state.

Step S2-2-17: The C-1 oil pressure $P_{C1}$ before reduced at Step S2-2-16 is set as a reference C-1 oil pressure $P_{C1m}$ and stored in the not-shown storage unit, as follows:

$$P_{C1m} \leftarrow P_{C1} \text{ before reduced.}$$

Step S2-2-18: It is decided whether or not the conditions for ending the in-neutral control of the first clutch C1 are satisfied. If the ending conditions are satisfied, the in-neutral control is ended. Otherwise, the subroutine returns to Step S2-2-4, and the foregoing steps are repeated.

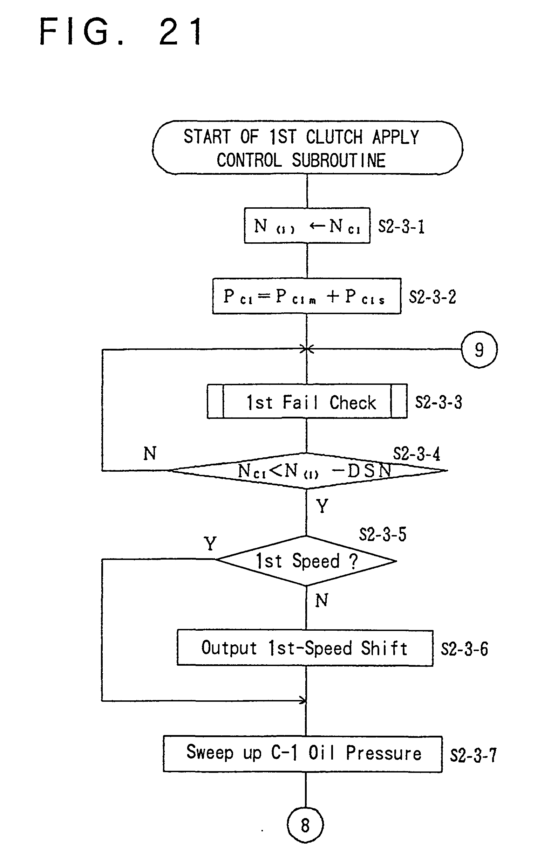

Here will be described the subroutine of the first clutch apply control at Step S2-3 of Fig. 12 with reference to Figs. 21 to 23.

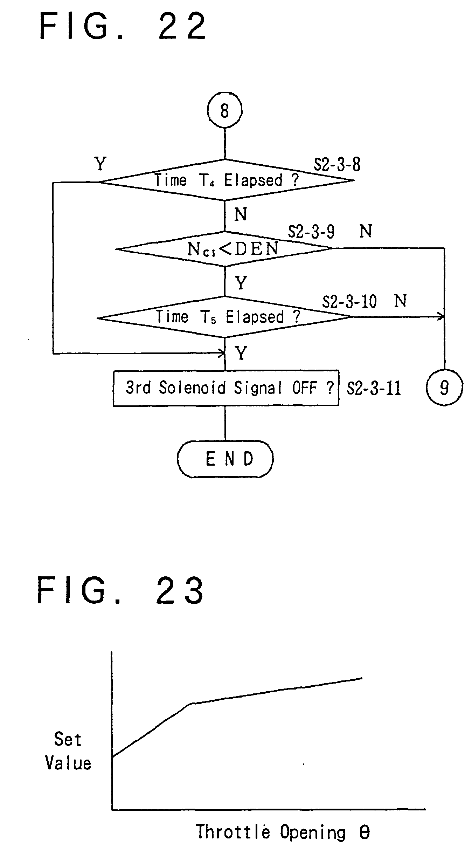

Fig. 21 is a first flow chart of a first clutch apply control subroutine in the embodiment of the present invention; Fig. 22 is a second flow chart of a first clutch apply control subroutine in the embodiment of the present invention; and Fig. 23 is a diagram illustrating a relation between a throttle opening and a set value in the embodiment of the present invention. Incidentally, Fig. 23 plots the set value against the throttle opening $\theta$.

Step S2-3-1: The clutch input side R.P.M. $N_{C1(i)}$ at the instant when the in-neutral control ending conditions are satisfied is stored as a value $N_{(1)}$ in the not-shown memory in the automatic transmission control unit 41 (Fig. 2). Simultaneously with this, the timing operation of the guard timer is started.

Step S2-3-2: A constant $P_{C1S}$ as a shelf pressure is added to the reference C-1 oil pressure $P_{C1m}$ as the base pressure set at Steps S2-2-13 and S2-2-18, and the sum is set as the C-1 oil pressure $P_{C1}$. Incidentally, the constant $P_{C1S}$ is set to such a value as to move the not-shown piston of the hydraulic servo C-1 (Fig. 5) without fail and to reduce the engaging shock to be generated by the application.

As a result, when the driver starts the vehicle so that the transfer from the stop to the start states of the vehicle is detected, the constant $P_{C1S}$ is added to the reference C-1 oil pressure $P_{C1m}$ so that the oil pressure to be fed to the hydraulic servo C-1 is boosted to bring the first clutch C1 into a partially applied state. Subsequently, the oil pressure to be fed to the hydraulic servo C-1 is further boosted to bring the first clutch C1 into the completely applied state.

Step S2-3-3: When the first fail check is executed to effect the fail decision, the neutral control is interrupted, and the 4th speed shift output is generated to feed the D-range pressure to the hydraulic servo C-1 thereby to apply the first clutch C1.

Step S2-3-4: It is awaited that the clutch input side R.P.M. $N_{C1}$ is smaller than the difference of the value $N_{(1)}$ from a constant DSN. If the clutch input side R.P.M. $N_{C1}$ is smaller than the difference of the value $N_{(1)}$ from the constant DSN, the start of engagement of the first clutch C1 is decided so that the subroutine advances to Step S2-3-5. Incidentally, if the clutch input side R.P.M. $N_{C1}$ is larger than the difference of the value $N_{(1)}$ from the constant DSN, the subroutine returns to Step S2-3-3.

Step S2-3-5: It is decided whether or not the gear stage is at the 1st speed. Then, the subroutine advances to Step S2-3-7, if at the 1st speed, but to Step S2-3-6 if NOT.

Step S2-3-6: The shift output generating means 115 (Fig. 1) generates the 1st speed shift output.

Step S2-3-7: The pressure boosting means 117 changes the throttle pressure $P_{TH}$ coming from the linear solenoid valve 66 (Fig. 4) and sweeps up the C-1 oil pressure $P_{C1}$. After this, this C-1 oil pressure $P_{C1}$ is boosted by every set pressures $\Delta P_B$ at each lapse of a time period $\Delta t_B$ to continue the engagement of the first clutch C1.

Step S2-3-8: It is decided whether or not a time period measured by the guard timer has elapsed. The subroutine advances to Step S2-3-11, if the time period $T_4$ has elapsed, but to Step S2-3-9 if NOT.

Step S2-3-9: It is decided whether or not the clutch input R.P.M. $N_{C1}$ is smaller than a constant DEN. The subroutine advances to Step S2-3-10, if the clutch input R.P.M. $N_{C1}$ is below the constant DEN, but returns to Step S2-3-3 if over the constant DEN. Incidentally, the third timer starts its timing operation if it is decided that the clutch input R.P.M. $N_{C1}$ is below the constant DEN.

Step S2-3-10: It is decided whether or not a time period $T_5$ measured by the third timer has elapsed. The subroutine advances to Step S2-3-11, if the time period $T_5$ has elapsed, but returns to Step S2-3-3 if NOT.

In this case, the set values of the constant $P_{C1S}$, the pressure $P_B$, the set pressure $\Delta P_B$ and so on are determined on the basis of a variable corresponding to the input torque $T_T$ such as the throttle opening $\theta$.

Step S2-3-11: The third solenoid signal $S_3$ is turned OFF.

Here will be described the first fail check subroutine of Step S1-5 of (Fig. 7) and Step S2-3-3 of Fig. 21.

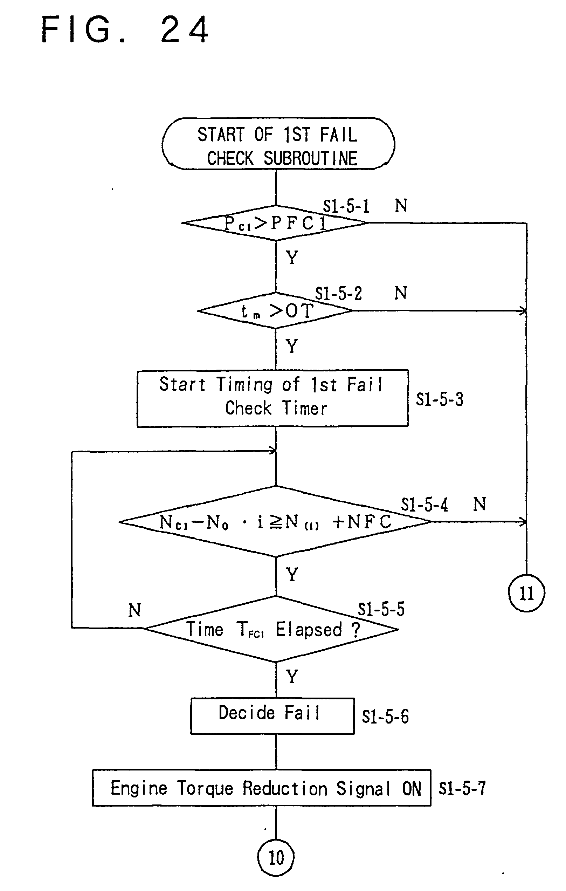

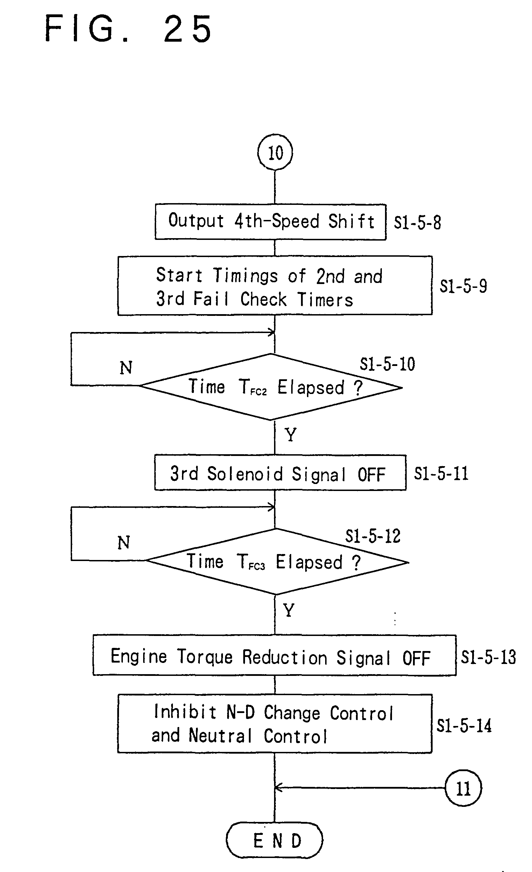

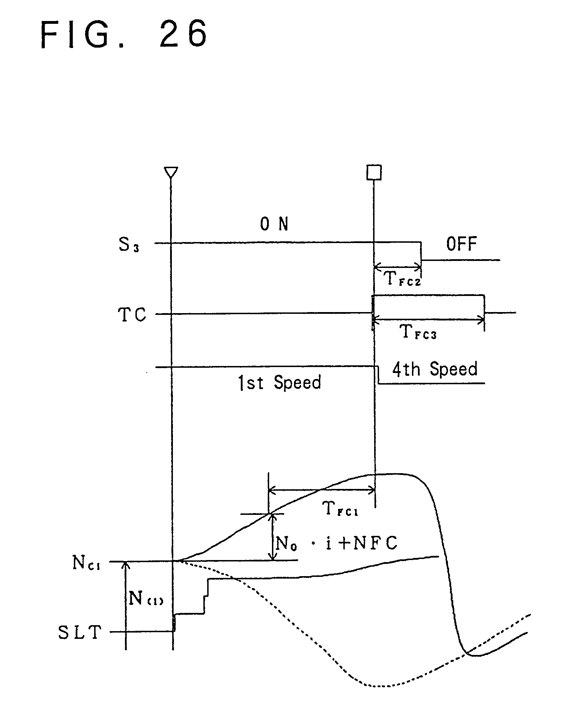

Fig. 24 is a first flow chart of a first fail check subroutine in the embodiment of the present invention; Fig. 25 is a second flow chart of a first fail check subroutine in the embodiment of the present invention; and Fig. 26 is a time chart of a first fail check subroutine in the embodiment of the present invention. Incidentally, only the subroutine of the first fail check of Step S1-5 of Fig. 7 will be described for conveniences of description. However, the subroutine of the first fail check of Step S2-3-3 of Fig. 21 is composed of the same steps.

Step S1-5-1: It is decided whether or not the C-1 oil pressure $P_{C1}$ has reached a minimum pressure necessary for applying the first clutch C1, i.e., a constant PFC1. The subroutine advances to Step S1-5-2, if the C-1 oil pressure $P_{C1}$ is over the constant PFC1, but is ended if NOT. As a matter of fact, however, the C-1 oil pressure $P_{C1}$ is not compared with the constant PFC1, but a signal SLT fed to the linear solenoid valve 66 (Fig. 4) is compared with a signal SLT.

Step S1-5-2: It is decided whether or not an oil temperature $t_m$ has reached a minimum temperature (e.g., 10 [°C]) necessary for the fail check, i.e., a constant OT. The subroutine advances to Step S1-5-3, if the oil temperature $t_m$ is over the constant OT, but is ended if NOT.

Incidentally, if the oil temperature $t_m$ is below the constant OT, the responsiveness of the oil drops so that the clutch input side R.P.M. $N_{C1}$ cannot be accurately detected. This may mistake the fail check. Therefore, the fail check is not executed if the oil temperature $t_m$ is below the constant OT.

Step S1-5-3: The first fail check timer starts its timing operation.

Step S1-5-4: In the aforementioned N-D change control, the signal SLT is fed to the solenoid of the linear solenoid valve 66 to sweep up the C-1 oil pressure $P_{C1}$. As a result, the first clutch C1 is applied as the C-1 oil pressure $P_{C1}$ rises, so that the clutch input side R.P.M. $N_{C1}$ gradually drops, as indicated by a broken curve of Fig. 26. Incidentally, if the hydraulic control unit 40 (Fig. 1) is caused to have its C-1 control valve 67 (Fig. 5) stuck for some reason, this C-1 control valve 67 may fail to generate the C-1 oil pressure $P_{C1}$ thereby to establish the fail state. In this case, the actual C-1 oil pressure $P_{C1}$ cannot be swept up.

In this meanwhile, moreover, the clutch input side R.P.M. $N_{C1}$ increases, as indicated by a solid curve in Fig. 26, if the not-shown accelerator pedal is depressed by the driver.

Therefore, the fail decision is made if the clutch input/output R.P.M. difference, as obtained from the clutch input side R.P.M. $N_{C1}$ and the output side R.P.M. (as will be called the "clutch output side R.P.M.") of the first clutch C1, is higher than a set value which is set on the basis of the clutch input/output R.P.M. difference when the N-D change is detected by the range changing operation detection means (i.e., at the start of the clutch application control when the starting operation is detected by the starting operation detection means 111 in the subroutine of the first fail check of Step 2-3-3 of Fig. 21 for the neutral control).

For these operations, the first R.P.M. detection means 101, i.e., the R.P.M. sensor 47 detects the clutch input side R.P.M. $N_{C1}$, and the second R.P.M. detection means 102 detects the clutch output side R.P.M. ($N_o \cdot i$) on the basis of the output R.P.M. $N_o$ of the speed change unit 16 and the gear ratio i which is achieved by the speed change unit 16.

Moreover, the fail decision means 119 decides from the following inequality whether or not the present clutch input/output R.P.M. difference is over a set value:

$$N_{C1} - N_o \cdot i \geqq N_{(1)} + NFC.$$

The subroutine advances to Step S1-5-5, if the present clutch input/output R.P.M. difference exceeds the set value, but is ended if NOT.

Here, the term ($N_{C1} - N_o \cdot i$) means the present clutch input/output R.P.M. difference. In this case, the 1st speed is established in the N-D change control by the speed change unit 16. Therefore, the gear ratio i is employed by that of the 1st speed (although the 2nd speed is established by the speed change unit 16 in the first fail check subroutine of Step S2-3-3 of Fig. 21 for the neutral control, because the hill-hold control is executed before the starting operation is detected by the starting operation detection means 111).

On the other hand, the term ($N_{(1)} + NFC$)

means the set value based on the clutch input/output R. P.M. difference when the N-D change is detected by the range changing detection means (although in the neutral control, when the starting operation is detected by the starting operation detection means 111). Since the vehicle stands still when the N-D change is detected by the range changing operation detection means (i.e., when the starting operation is detected by the starting operation detection means 111), the output R.P.M. $N_o$ is 0, and the clutch input/output R.P.M. difference is expressed by:

$$N_{(1)} - 0 = N_{(1)}.$$

In case no fail state occurs and in case no delay is in the application of the first clutch C1, this application of the first clutch C1 is started as the C-1 oil pressure $P_{C1}$ rises, so that the clutch input/output R.P.M. difference never fails to decrease.

In case the fail state occurs, on the contrary, the first clutch C1 is not applied to increase the clutch input/output R.P.M. difference, even if the accelerator pedal is depressed to raise the engine R.P.M. $N_E$.

Therefore, the present clutch input/output R.P.M. difference is compared with the clutch input/output R.P.M. difference at the instant when the N-D change is detected by the range changing operation detection means (that is, when the starting operation is detected by the starting operation detection means 111).

As a result, even if the engine R.P.M. $N_E$ rises, it is possible to reliably detect the state in which the first clutch C1 cannot be applied, so that the fail decision can be accurately made.

Incidentally, the fail state is not set. However, if the engagement of the first clutch C1 is delayed due to the delay of the rise of the C-1 oil pressure $P_{C1}$, the engine accelerates slightly so that the clutch input side R.P.M. $N_{C1}$ and accordingly the clutch input/output R.P.M. difference increase. Therefore, the aforementioned set value is the sum $(N_{(1)} + NFC)$ of the clutch input/output R.P.M. difference at the time when the N-D change is detected by the range changing operation detection means (that is, when.the starting operation is detected by the starting operation detection means 111) and the safety value NFC for preventing the erroneous decision of occurrence of the fail state.

In the present embodiment, moreover, the existing vehicle speed sensor 51, as arranged at the output side of the speed change unit 16, is used so that the second R.P.M. detection means 102 detects the clutch output side R.P.M. on the basis of the output R.P.M. $N_o$ detected by the vehicle speed sensor 51 and the gear ratio i. As a result, no special sensor need be arranged at the output side of the first clutch C1 so that the cost can be lowered.

In this case, the second R.P.M. detection means 102 is constructed of the algorithm in the automatic transmission control system 40 but could be constructed of the sensor arranged on the rotating member at the output side of the first clutch C1.

Step S1-5-5: It is decided whether or not a time period $T_{FC1}$ measured by the first fail check timer has elapsed. The subroutine advances to Step S1-5-6, if the time period $T_{FC1}$ has elapsed, but returns to Step S1-5-4, if NOT.

Step S1-5-6: The fail decision means 118 (Fig. 1) decides that a fail state has occurred and makes the fail decision.

Step S1-5-7: The engine torque control means turns ON an engine torque reduction signal TC as the engine torque control signal to reduce the fuel injection rate of the engine 10 and accordingly the engine torque thereby to reduce the engaging shock which is generated when the first clutch C1 is applied. Incidentally, the method of reducing the engine torque can be exemplified by reducing the fuel injection rate of the engine 10, by angularly delaying the ignition timing of the engine 10, by interrupting the fuel injection within a range for the engine 10 to maintain the idling R.P.M., or by clocking the subthrottle valve.

Step S1-5-8: The shift output generating means 115 generates the 4th speed shift output to reduce the torque to be outputted from the speed change unit 16, thereby to reduce the engaging shock which is caused when the first clutch C1 is applied. Incidentally, even if the vehicle is started, the 4th speed shift output is maintained till the intrinsic running state in which the 4th speed is established, and then the gear stage is set according to the running state of the vehicle.

Step S1-5-9: The timing operations of the second fail check timer and a third fail check timer are started.

Step S1-5-10: It is awaited that a time period $T_{FC2}$ measured by a second fail check timer has elapsed. This time period $T_{FC2}$ is set by considering the time period till the 4th speed is actually established after the 4th speed shift output has been generated.

Step S1-5-11: The fail-safe means 119 turns OFF the third solenoid signal $S_3$ to switch the neutral relay valve 64 thereby to feed the D-range pressure to the hydraulic servo C-1 to apply the first clutch C1. Thus, the N-D change control (i.e., the neutral control in the first fail check subroutine of Step 2-3-3 of Fig. 21) can be interrupted to start the vehicle.

Step S1-5-12: It is awaited that a time period $T_{FC3}$ measured by the third fail check timer has elapsed. This time period $T_{FC3}$ is set by considering the time period till the 4th speed is actually established after the 4th speed shift output has been generated, and the time period till the first clutch is actually applied after the third solenoid signal $S_3$ has been turned OFF.

Step S1-5-13: The engine torque reduction signal TC is turned OFF.

Step S1-5-14: The pressure boost inhibition means inhibits the N-D change control, and the pressure reduction inhibition means inhibits the neutral control.

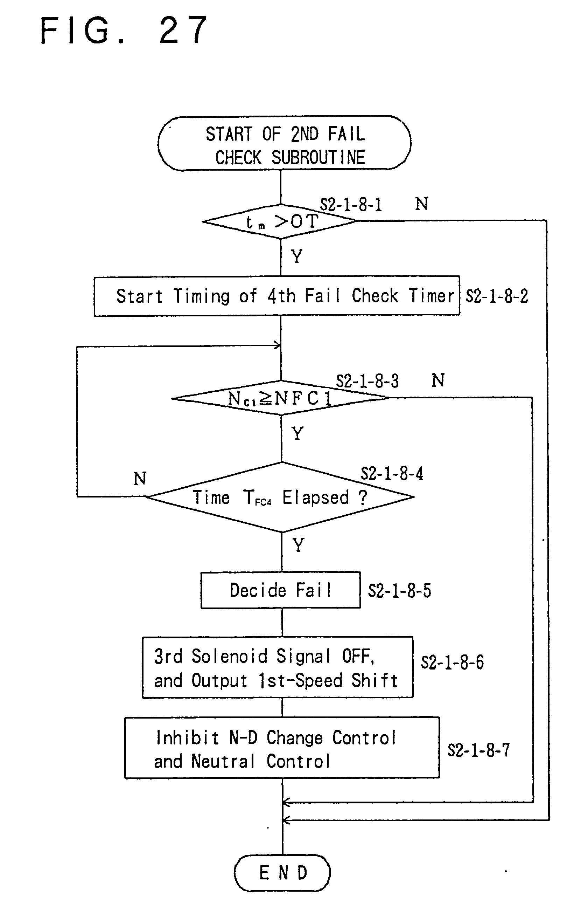

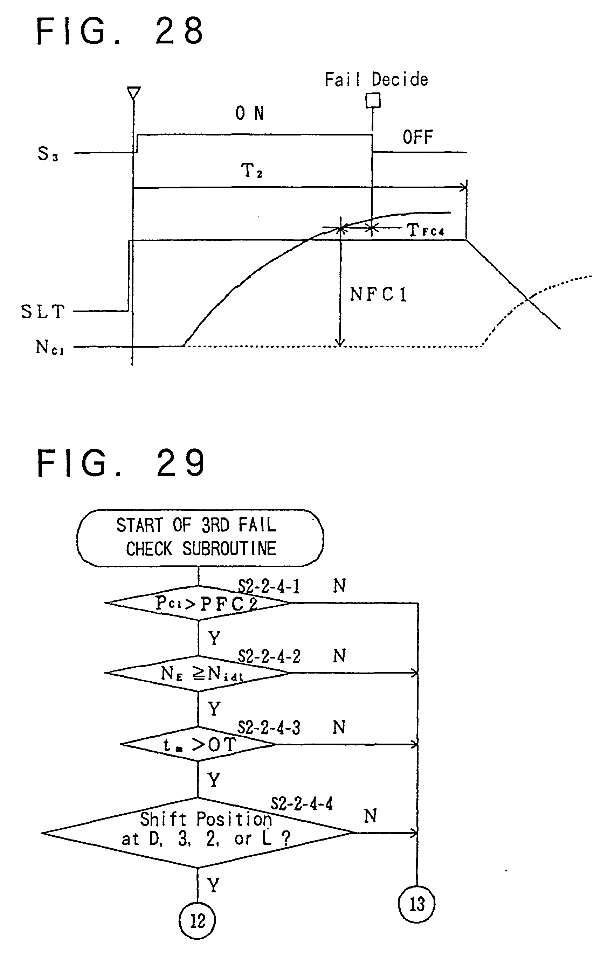

Next, the second fail check subroutine of Step S2-1-8 of Fig. 14 will be described with reference to the flow chart of Fig. 27 and the time chart of Fig. 28.

Fig. 27 is a flow chart of the second fail check subroutine, and Fig. 28 is a time chart at the time of the second fail check. Incidentally, this second fail check subroutine is repeated till the time period $T_2$ measured by the timer has elapsed at Step 2-1-9 of Fig. 14.

Step S2-1-8-1: It is decided whether or not the oil temperature $t_m$ is higher than the constant OT (e.g., 20 [°C ]). The subroutine advances to Step S2-1-8-2, if the oil temperature $t_m$ is higher than the constant OT, but is ended if the oil temperature $t_m$ is lower than the constant OT.

Step S2-1-8-2: The timing operation of a fourth fail check timer is started.

Step S2-1-8-3: In the first clutch release control subroutine of Fig. 13, the C-1 oil pressure $P_{C1}$ corresponding to the engine R.P.M. $N_E$ is generated at Step 2-1-7. After this, the signal SLT is sent to the solenoid of the linear solenoid valve 66 (Fig. 4) to sweep down the C-1 oil pressure $P_{C1}$. As a result, the clutch input side R.P.M. $N_{C1}$ is at 0, when the C-1 oil pressure $P_{C1}$ corresponding to the engine R.P.M. $N_E$ is generated, as indicated by a broken curve of Fig. 28, but is then increased according to the sweep-down of the C-1 oil pressure $P_{C1}$.

In the hydraulic control unit 40 (Fig. 1), if the C-1 control valve 67 (Fig. 5) has its valve stuck by any cause, for example, there may arise the fail state in which the C-1 oil pressure $P_{C1}$ is not generated in the C-1 control valve 67. In this case, the actual C-1 oil pressure $P_{C1}$ cannot to correspond the engine R.P.M. $N_E$.

As a result, even if the C-1 oil pressure $P_{C1}$ just before that corresponding to the engine R.P.M. $N_E$ is generated at Step S2-1-7, the release of the first clutch C1 is started so that the clutch input side R.P.M. $N_{C1}$ increases, as indicated by a solid curve in Fig. 28.

It is, therefore, decided whether or not the clutch input side R.P.M. $N_{C1}$ is higher than a constant NFC1 (e.g., 400 [rpm]). The subroutine advances to Step S2-1-8-4, if the clutch input side R.P.M. $N_{C1}$ is over the constant NFC1, but is ended if NOT.

Step S2-1-8-4: It is decided whether or not a time period $T_{FC4}$ measured by the fourth fail check timer has elapsed. The subroutine advances to Step S2-1-8-5, if the time period $T_{FC4}$ has elapsed, but returns to Step S2-1-8-3 if NOT.

Step S2-1-8-5: The fail decision means 118 decides the occurrence of the fail state and makes the fail decision.

Step S2-1-8-6: The fail-safe means 119 turns OFF the third solenoid signal $S_3$ to switch the neutral relay valve 64 and to cause the shift output generating means 115 to generate the 1st speed shift output so that the D-range pressure is fed to the hydraulic servo C-1 to apply the first clutch C1. Thus, the neutral control is interrupted.

Step S2-1-8-7: From now on, the N-D change control and the neutral control are inhibited.

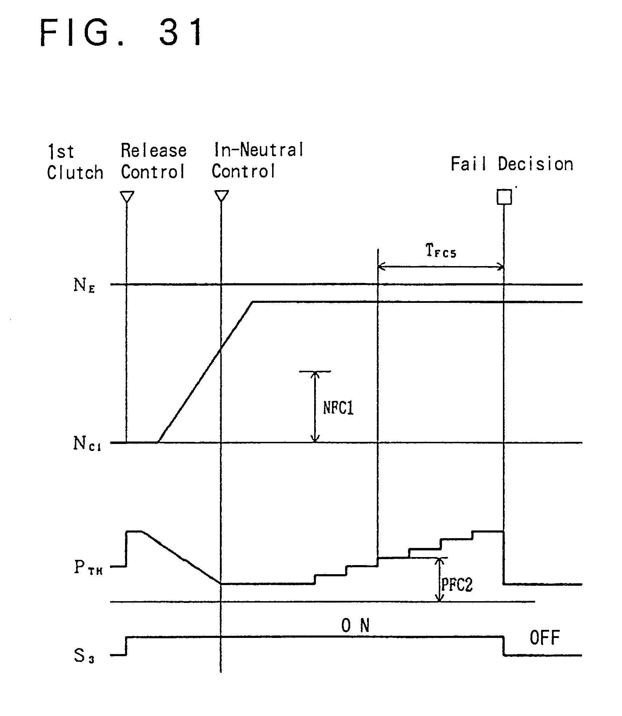

Next, the third fail check subroutine of the Step S2-2-2-4 of Fig. 17 will be described with reference of the flow charts of Figs. 29-and 30 and the time chart of Fig. 31.

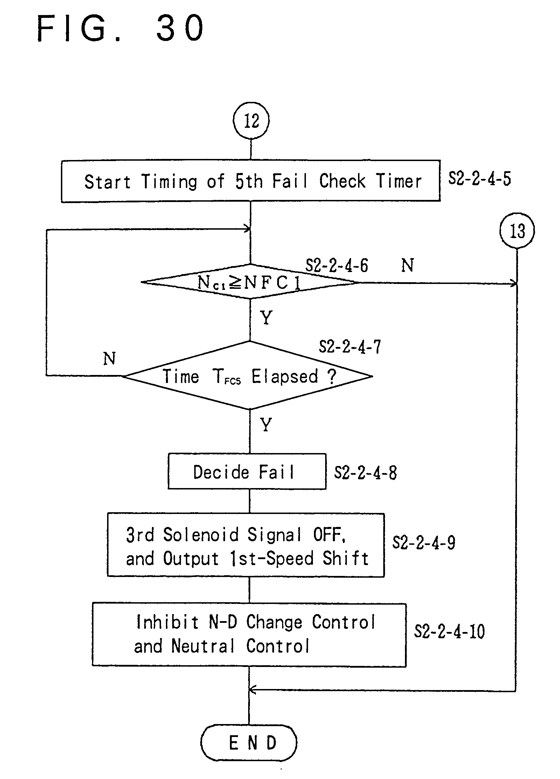

Fig. 29 is a first flow chart of a third fail check subroutine; Fig. 30 is a second flow chart of the third fail check subroutine; and Fig. 31 is a time chart of the third fail check subroutine.

Step S2-2-4-1: In the in-neutral control subroutine of Fig. 17, if it is decided at Step S2-2-9 that the first clutch C1 is inactive, the signal SLT is sent to the solenoid of the linear solenoid valve 66 (Fig. 4) to boost the throttle pressure $P_{TH}$, as shown in Fig. 31.

In the hydraulic control unit 40 (Fig. 1), if the C-1 control valve 67 (Fig. 5) has its valve stuck by any cause, for example, there may arise a fail state in which the C-1 oil pressure $P_{C1}$ is not generated in the C-1 control valve 67, despite that the throttle pressure $P_{TH}$ is generated by the linear solenoid valve 66. In this case, the actual C-1 oil pressure $P_{C1}$ cannot be boosted.

As a result, the engagement of the first clutch C1 is not started even if the C-1 oil pressure $P_{C1}$ is boosted, so that the clutch input side R.P.M. $N_{C1}$ is still high, as illustrated in Fig. 31.

In order to decide whether or not the first clutch C1 is inactive, therefore, it is decided that the C-1 oil pressure $P_{C1}$ is higher than a constant PFC2. The subroutine advances to Step S2-2-4-2, if the C-1 oil pressure $P_{C1}$ is over the constant PFC2, but is ended if NOT. In this case, the constant PFC2 is set to such a value as to imply that the first clutch C1 is active. As a matter of fact, however, not the C-1 oil pressure $P_{C1}$ and the constant PFC2 but the signal SLT fed to the linear solenoid valve 66 and the set value are compared.

Step S2-2-4-2: It is decided whether or not the engine R.P.M. $N_E$ is higher than an idling R.P.M. $N_{id1}$. The subroutine advances to Step S2-2-4-3, if the engine R.P.M. $N_E$ is over the idling value $N_{1d1}$, but is ended if NOT.

Step S2-2-4-3: It is decided whether or not the oil temperature $t_m$ is higher than the constant OT. The subroutine advances to Step S2-2-4-4, if the oil temperature $t_m$ is over the constant OT, but is ended if NOT.

Step S2-2-4-4: It is decided whether or not the shift position falls at any of the D, 3, 2 and L positions. The subroutine advances to Step S2-2-4-5, if the shift positions falls at any of the D, 3, 2 and L positions, but is ended if NOT.

Step S2-2-4-5: The timing operation of a fifth fail check timer is started.

Step S2-2-4-6: If the C-1 control valve 67 has its valve stuck by any cause, as described above, there may arise the fail state in which the C-1 oil pressure $P_{C1}$ is not generated in the C-1 control valve 67. In this case, the actual C-1 oil pressure $P_{C1}$ cannot be boosted so that the clutch input side R.P.M. $N_{C1}$ does not decrease. It is, therefore, decided whether or not the clutch input side R.P.M. $N_{C1}$ is higher than the constant NFC1 (e.g., 400 [rpm]). The subroutine advances to Step S2-2-4-7, if the clutch input side R.P.M. $N_{C1}$ is over the constant NFC1, but is ended if NOT.

Step S2-2-4-7: It is decided whether or not a time period $T_{FC5}$ has elapsed. The subroutine advances to Step S2-2-4-8, if the time period $T_{FC5}$ has elapsed, but returns to Step S2-2-4-6 if NOT.

Step S2-2-4-8: The fail decision means 118 (Fig. 1) decides the occurrence of the fail state and makes the fail decision.

Step S2-2-4-9: The fail-safe means 119 turns OFF the third solenoid signal $S_3$ to switch the neutral relay valve 64 and to cause the shift output generating means 115 to generate the 1st speed shift output so that the D-Range pressure is fed to the hydraulic servo C-1 to apply the first clutch C1. Thus, the neutral control is interrupted.

Step S2-2-4-10: From now on, the N-D change control and the neutral control are inhibited.

**Claims**

1. A control system for an automatic transmission, comprising: fluid transmission unit (12) for receiving a rotation from an engine (10); a speed change unit (16) including an input clutch ($C_I$) to be applied when a forward running range is selected, so that the rotation of said fluid transmission unit (12) is inputted thereto when said input clutch ($C_I$) is applied; a hydraulic control unit (40) for establishing a plurality of gear stages in said speed change unit (16); first R.P.M. detection means (101) detecting a clutch input side R.P.M. of the input side of the input clutch ($C_I$); second R.P.M. detection means (102) for detecting the clutch output side R.P.M. of the output side of said input clutch ($C_I$); stop state detection means (110) for detecting the stop state of a vehicle; starting operation detection means (111) detecting the starting operation of the driver; and a control unit (114),

   wherein said hydraulic control unit (40) includes: a hydraulic servo (104) for applying/releasing the input clutch ($C_I$); a control signal oil pressure generating solenoid valve (105) for generating a control signal oil pressure; a control valve (106) for regulating a forward running range pressure according to the control signal oil pressure to generate a control oil pressure; a change signal oil pressure generating solenoid valve (108) for generating a change signal oil pressure; and a change-over valve (107) adapted to be changed by said change signal oil pressure, for taking a first position, in which it feeds the forward running range pressure to said hydraulic servo (104), and a second position in which it feeds the control oil pressure to said hydraulic servo (104), and

   wherein said control unit (114) includes: shift output generating means (115) to generate a shift output to achieve the individual gear stages; pressure reducing means (116) for outputting, when the stop state of the vehicle is detected by said stop state detection means (110), a change signal to the solenoid of said change signal oil pressure generating solenoid valve (108) to bring said change-over valve (107) into the second position, and a control signal to the solenoid of said control signal oil pressure generating solenoid valve (105) to reduce the control oil pressure thereby to bring said input clutch ($C_I$) into a predetermined released state; pressure boosting means (117) outputting, when the starting operation is detected by said starting operation detection means (111), the control signal to the solenoid of said control signal oil pressure generating solenoid valve (105) to boost the control oil pressure thereby to bring said input clutch ($C_I$) into a predetermined applied state, **characterised by** said pressure boosting means (117) outputting, when said input clutch ($C_I$) comes into a predetermined applied state, the change signal to the solenoid of said change signal oil pressure generating solenoid valve (108) to bring said change-over valve (107) into the first position;

   by fail decision means (118) for deciding a fail if the clutch input/output R.P.M. difference between the R.P.M. of the input side and the R.P.M. of the output side of said input clutch ($C_I$) is over the set value which is set on the basis of the clutch input/output R.P.M. difference when the starting operation is detected by said starting operation detection means (111); and by fail-safe means (119) or causing said shift output generating means (115) to generate a shift output to a higher speed gear stage preferentially of the output of the control signal by said pressure boosting means (117), when the fail decision is executed by said fail decision means (118), to output the change signal to the solenoid of said change signal oil pressure generating solenoid valve (108) thereby to bring said change-over valve (107) into the first position.

2. A control system for an automatic transmission, comprising: fluid transmission unit (12) for receiving a rotation from an engine (10); a speed change unit including an input clutch ($C_I$) to be applied when a forward running range is selected, so that the rotation of said fluid transmission unit (12) is inputted thereto when said input clutch ($C_I$) is applied; a hydraulic control unit (40) for establishing a plurality of gear stages in said speed change unit (16); first R.P.M. detection means (101) for detecting a clutch input side R.P.M. of the input side of the input clutch ($C_I$); second R.P.M. detection means (102) detecting the clutch output side R.P.M. of the output side of said input clutch ($C_I$); range changing operation detection means detecting a changing operation to a forward running range; and a control unit (114),

wherein said hydraulic control unit (40) includes: a hydraulic servo (104) for applying/releasing the input clutch ($C_I$); a control signal oil pressure generating solenoid valve (105) for generating a control signal oil pressure; a control valve (106) for regulating a forward running range pressure according to the control signal oil pressure to generate a control oil pressure; a change signal oil pressure generating solenoid valve (108) for generating a change signal oil pressure; and a change-over valve (107) adapted to be changed by said change signal oil pressure, for taking a first position, in which it feeds the forward running range pressure to said hydraulic servo (104), and a second position in which it feeds the control oil pressure to said hydraulic servo (104), and

wherein said control unit (114) includes: shift output generating means (115) to generate a shift output to achieve the individual gear stages; pressure boosting means (117) outputting, when the changing operation to the forward running range is detected by said range changing operation detection means, a change signal to the solenoid of said change signal oil pressure generating solenoid valve (108) to bring said change-over valve (107) into the second position, and then a control signal to the solenoid of said control signal oil pressure generating solenoid valve (105) to boost the control oil pressure thereby to bring said input clutch ($C_I$) into a predetermined applied state, **characterised by** said pressure boosting means (117) outputting, when said input clutch comes ($C_I$) into said predetermined applied state, the change signal to the solenoid of said change signal oil pressure generating solenoid valve (108) to bring said change-over valve (107) into the first position; by fail decision means (118) to decide a fail if the clutch input/output R.P.M. difference between the R.P.M. of the input side and the R.P.M. of the output side of said input clutch ($C_I$) is over the set value which is set on the basis of the clutch input/output R.P.M. difference when the starting operation is detected by a starting operation detection means (111); and by fail-safe means (119) for causing said shift output generating means (115) to generate a shift output to a higher speed gear stage preferentially of the output of the control signal by said pressure boosting means (117), when the fail decision is executed by said fail decision means (118), to output the change signal to the solenoid of said change signal oil pressure generating solenoid valve (108) thereby to bring said change-over valve (107) into the first position.

3. A control system for an automatic transmission according to claim 1 or 2, further comprising:

output R.P.M. detection means (51) for detecting the output R.P.M. of said speed change unit (16),

wherein said second R.P.M. detection means (102) detects the clutch output side R.P.M. on the basis of the output R.P.M. and the gear ratio of the gear state which is achieved by said speed change unit (16).

4. A control system for an automatic transmission according to claim 1, 2, or 3,

wherein said control unit (114) further includes engine torque control means for generating an engine torque control signal, when the fail decision is made by said fail decision means (118), to reduce the torque of the engine (10) till the end of the application of said input clutch ($C_I$) at the shortest.

5. A control system for an automatic transmission according to any one of claims 1 to 4,

wherein said fail-safe means (119) causes, when the fail decision is made by said fail decision means (118), said shift output generating means (115) to generate a shift output to a higher gear stage prior to the output of the control signal by said pressure boosting means (117), and outputs the change signal, after the shift to the higher gear stage has been achieved, to the solenoid of said change signal oil pressure generating solenoid valve (108) to bring said change-over valve (107) into the first position.

6. A control system for an automatic transmission according to any one of claims 1 to 5,

wherein control unit (114) further includes pressure reduction inhibition means for inhibiting the outputs of the change signal and the control signal by said pressure reducing means (116) when the fail decision is made by said fail decision means (118).

7. A control system for an automatic transmission according to any one of claims 1 to 6,

wherein control unit (114) further includes pressure boost inhibition means for inhibiting the outputs of the change signal and the control signal by said pressure boosting means (117) when the fail decision is made by said fail decision means (118).

**Patentansprüche**

1. Steuerungssystem für ein Automatikgetriebe, das aufweist: eine Flüssigkeitsgetriebeeinheit (12) zum Empfang einer Drehung von einem Motor (10); eine Schaltgetriebeeinheit (16) mit einer Antriebskupplung ($C_I$), die einzurücken ist, wenn ein Vorwärtsfahrbereich gewählt wird, so daß die Drehung der Flüssigkeitsgetriebeeinheit (12) beim Einrücken der Antriebskupplung (C$_I$) darauf übertragen wird; eine hydraulische Steuereinheit (40) zum Einlegen mehrerer Gänge in der Schaltgetriebeeinheit (16); eine erste Drehzahldetektionseinrichtung (101) zum Erfassen einer antriebsseitigen Kupplungsdrehzahl auf der Antriebsseite der Antriebskupplung (C$_I$); eine zweite Drehzahldetektionseinrichtung (102) zum Erfassen der abtriebsseitigen Kupplungsdrehzahl auf der Abtriebsseite der Antriebskupplung (C$_I$); eine Stillstandsdetektionseinrichtung (110) zum Erfassen des Stillstands eines Fahrzeugs; eine Anfahrdetektionseinrichtung (111) zum Erfassen der Anfahroperation des Fahrers; und eine Steuereinheit (114),

wobei die hydraulische Steuereinheit (40) aufweist: eine hydraulische Servoeinrichtung (104) zum Einrücken/Ausrücken der Antriebskupplung (C$_I$); ein Steuersignalöldruckerzeugungs-Magnetventil (105) zum Erzeugen eines Steuersignalöldrucks; ein Steuerventil (106) zum Regulieren eines Vorwärtsfahrbereichsdrucks entsprechend dem Steuersignalöldruck, um einen Steueröldruck zu erzeugen; ein Schaltsignalöldruckerzeugungs-Magnetventil (108) zum Erzeugen eines Schaltsignalöldrucks; und ein Umschaltventil (107), das so angepaßt ist, daß es durch den Schaltsignalöldruck in eine erste Stellung, in der es den Vorwärtsfahrbereichsdruck an die hydraulische Servoeinrichtung (104) anlegt, und in eine zweite Stellung geschaltet wird, in der es den Steueröldruck an die hydraulische Servoeinrichtung (104) anlegt, und

wobei die Steuereinheit (114) aufweist: eine Schaltausgangssignalerzeugungseinrichtung (115) zum Erzeugen eines Schaltausgangssignals, um die einzelnen Gänge einzulegen; eine Druckminderungseinrichtung (116), um bei Erfassung des Stillstands des Fahrzeugs durch die Stillstandsdetektionseinrichtung (110) ein Schaltsignal zum Magneten des Schaltsignalöldruckerzeugungs-Magnetventils (108) auszugeben und das Umschaltventil (107) in die zweite Stellung zu bringen, und um ein Steuersignal zum Magneten des Steuersignalöldruckerzeugungs-Magnetventils (105) auszugeben, um den Steueröldruck zu vermindern und dadurch die Antriebskupplung (C$_I$) in einen vorgegebenen ausgerückten Zustand zu bringen; eine Druckverstärkungseinrichtung (117), die bei Erfassung der Anfahroperation durch die Anfahrdetektionseinrichtung (111) das Steuersignal zum Magneten des Steuersignalöldruckerzeugungs-Magnetventils (105) ausgibt, um den Steueröldruck zu erhöhen und dadurch die Antriebskupplung (C$_I$) in einen vorgegebenen eingerückten Zustand zu bringen, **gekennzeichnet durch** die Druckverstärkungseinrichtung (117), die, wenn die Antriebskupplung (C$_I$) in einen vorgegebenen eingerückten Zustand kommt, das Schaltsignal zum Magneten des Schaltsignalöldruckerzeugungs-Magnetventils (108) ausgibt, um das Umschaltventil (107) in die erste Stellung zu bringen; eine Störungszustandsentscheidungseinrichtung (118) zum Feststellen einer Störung, wenn die Antriebs/Abtriebs-Drehzahldifferenz der Kupplung zwischen der Drehzahl auf der Antriebsseite und der Drehzahl auf der Abtriebsseite der Antriebskupplung (C$_I$) über dem Sollwert liegt, der auf der Basis der Antriebs-/Abtriebs-Drehzahldifferenz der Kupplung bei Erfassung der Anfahroperation **durch** die Anfahrdetektionseinrichtung (111) festgesetzt wird; und eine Ausfallsicherheitseinrichtung (119), um zu veranlassen, daß die Schaltausgangssignalerzeugungseinrichtung (115) vor der Ausgabe des Steuersignals **durch** die Druckverstärkungseinrichtung (117) bevorzugt ein Schaltausgangssignal für einen höheren Gang erzeugt, wenn die Störungsentscheidung **durch** die Störungszustandsentscheidungseinrichtung (118) ausgeführt wird, um das Schaltsignal zum Magneten des Schaltsignalöldruckerzeugungs-Magnetventils (108) auszugeben und **dadurch** das Umschaltventil (107) in die erste Stellung zu bringen.

2. Steuerungssystem für ein Automatikgetriebe, das aufweist: eine Flüssigkeitsgetriebeeinheit (12) zum Empfang einer Drehung von einem Motor (10); eine Schaltgetriebeeinheit (16) mit einer Antriebskupplung (C$_I$), die einzurücken ist, wenn ein Vorwärtsfahrbereich gewählt wird, so daß die Drehung der Flüssigkeitsgetriebeeinheit (12) beim Einrücken der Antriebskupplung (C$_I$) darauf übertragen wird; eine hydraulische Steuereinheit (40) zum Einlegen mehrerer Gänge in der Schaltgetriebeeinheit (16); eine erste Drehzahldetektionseinrichtung (101) zum Erfassen einer antriebsseitigen Kupplungsdrehzahl auf der Antriebsseite der Antriebskupplung (C$_I$); eine zweite Drehzahldetektionseinrichtung (102) zum Erfassen der abtriebsseitigen Kupplungsdrehzahl auf der Abtriebsseite der Antriebskupplung (C$_I$); eine Bereichsumschaltungsdetektionseinrichtung zum Erfassen eines Umschaltvorgangs zu einem Vorwärtsfahrbereich; und eine Steuereinheit (114),

wobei die hydraulische Steuereinheit (40) aufweist: eine hydraulische Servoeinrichtung (104) zum Einrücken/Ausrücken der Antriebskupplung (C$_I$); ein Steuersignalöldruckerzeugungs-Magnetventil (105) zum Erzeugen eines Steuersignalöldrucks; ein Steuerventil (106) zum Regulieren eines Vorwärtsfahrbereichsdrucks entsprechend dem Steuersignalöldruck, um einen Steueröldruck zu erzeugen; ein Schaltsignalöldruckerzeugungs-Magnetventil (108) zum Erzeugen eines Schaltsignalöldrucks; und ein Umschaltventil (107), das so angepaßt ist, daß es durch den Schaltsignalöldruck in eine erste Stellung, in der es den Vorwärtsfahrbereichsdruck an die hydraulische Servoeinrichtung (104) anlegt, und in eine zweite Stellung geschaltet wird, in der es den Steueröldruck an die hydraulische Servoeinrichtung (104) anlegt, und

wobei die Steuereinheit (114) aufweist: eine Schaltausgangssignalerzeugungseinrichtung (115) zum Erzeugen eines Schaltausgangssignals, um die einzelnen Gänge einzulegen; eine Druckverstärkungseinrichtung (117), um bei Erfassung des Schaltvorgangs zum Vorwärtsfahrbereich durch die Bereichsumschaltungsdetektionseinrichtung ein Schaltsignal zum Magneten des Schaltsignalöldruckerzeugungs-Magnetventils (108) auszugeben, um das Umschaltventil (107) in die zweite Stellung zu bringen, und um dann ein Steuersignal zum Magneten des Steuersignalöldruckerzeugungs-Magnetventils (105) auszugeben, um den Steueröldruck zu erhöhen und dadurch die Antriebskupplung $(C_I)$ in einen vorgegebenen eingerückten Zustand zu bringen, **gekennzeichnet durch** die Druckverstärkungseinrichtung (117), die, wenn die Antriebskupplung $(C_I)$ in einen vorgegebenen eingerückten Zustand kommt, das Schaltsignal zum Magneten des Schaltsignalöldruckerzeugungs-Magnetventils (108) ausgibt, um das Umschaltventil (107) in die erste Stellung zu bringen; eine Störungszustandsentscheidungseinrichtung (118) zum Feststellen einer Störung, wenn die Antriebs-/Abtriebs-Drehzahldifferenz der Kupplung zwischen der Drehzahl auf der Antriebsseite und der Drehzahl auf der Abtriebsseite der Antriebskupplung $(C_I)$ über dem Sollwert liegt, der auf der Basis der Antriebs-/Abtriebs-Drehzahldifferenz der Kupplung bei Erfassung der Anfahroperation **durch** die Anfahrdetektionseinrichtung (111) festgesetzt wird; und eine Ausfallsicherheitseinrichtung (119), um zu veranlassen, daß die Schaltausgangssignalerzeugungseinrichtung (115) vor der Ausgabe des Steuersignals **durch** die Druckverstärkungseinrichtung (117) bevorzugt ein Schaltausgangssignal für einen höheren Gang erzeugt, wenn die Störungsentscheidung **durch** die Störungszustandsentscheidungseinrichtung (118) ausgeführt wird, um das Schaltsignal zum Magneten des Schaltsignalöldruckerzeugungs-Magnetventils (108) auszugeben und **dadurch** das Umschaltventil (107) in die erste Stellung zu bringen.

3. Steuerungssystem für ein Automatikgetriebe nach Anspruch 1 oder 2, das ferner aufweist:

eine Abtriebsdrehzahldetektionseinrichtung (51) zum Erfassen der Abtriebsdrehzahl der Schaltgetriebeeinheit (16);

wobei die zweite Drehzahldetektionseinrichtung (102) die abtriebsseitige Kupplungsdrehzahl auf der Basis der Abtriebsdrehzahl und des Übersetzungsverhältnisses des Gangs erfaßt, der durch die Schaltgetriebeeinheit (16) eingelegt wird.

4. Steuerungssystem für ein Automatikgetriebe nach Anspruch 1, 2 oder 3,
wobei die Steuereinheit (114) ferner eine Motordrehmomentsteuereinrichtung zum Erzeugen eines Motordrehmomentsteuersignals aufweist, wenn die Störungsentscheidung durch die Störungszustandsentscheidungseinrichtung (118) getroffen wird, um das Drehmoment des Motors (10) mindestens bis zur Beendigung des Einrükkens der Antriebskupplung $(C_I)$ zu vermindern.

5. Steuerungssystem für ein Automatikgetriebe nach einem der Ansprüche 1 bis 4,
wobei die Ausfallsicherheitseinrichtung (119), wenn die Störungsentscheidung durch die Störungszustandsentscheidungseinrichtung (118) getroffen wird, veranlaßt, daß die Schaltausgangssignalerzeugungseinrichtung (115) vor der Ausgabe des Steuersignals durch die Druckverstärkungseinrichtung (117) ein Schaltausgangssignal für einen höheren Gang erzeugt und nach dem Umschalten in den höheren Gang das Schaltsignal zum Magneten des Schaltsignalöldruckerzeugungs-Magnetventils (108) ausgibt, um das Umschaltventil (107) in die erste Stellung zu bringen.

6. Steuerungssystem für ein Automatikgetriebe nach einem der Ansprüche 1 bis 5,
wobei die Steuereinheit (114) ferner eine Druckminderungsblockiereinrichtung aufweist, um die Ausgabe des Schaltsignals und des Steuersignals durch die Druckminderungseinrichtung (116) zu blockieren, wenn die Störungsentscheidung durch die Störungszustandsentscheidungseinrichtung (118) getroffen wird.

7. Steuerungssystem für ein Automatikgetriebe nach Anspruch 1 bis 6,
wobei die Steuereinheit (114) ferner eine Druckverstärkungsblockiereinrichtung aufweist, um die Ausgabe des Schaltsignals und des Steuersignals durch die Druckverstärkungseinrichtung (117) zu blockieren, wenn die Störungsentscheidung durch die Störungszustandsentscheidungseinrichtung (118) getroffen wird.

**Revendications**

1. Système de commande pour transmission automatique, comprenant : une unité de transmission de fluide (12) destinée à recevoir une rotation provenant d'un moteur (10), une unité de changement de vitesse (16) comprenant un embrayage d'entrée

($C_I$) à appliquer lorsqu'un rapport de marche avant est sélectionné, de telle sorte que la rotation de ladite unité de transmission de fluide (12) y est appliquée en entrée quand ledit embrayage d'entrée ($C_I$) est appliqué, une unité de commande hydraulique (40) pour établir une pluralité de vitesses dans ladite unité de changement de vitesse (16), un premier moyen de détection de vitesse de rotation (101) détectant une vitesse de rotation côté entrée d'embrayage du côté de l'entrée de l'embrayage d'entrée ($C_I$), un second moyen de détection de vitesse de rotation (102) pour détecter la vitesse de rotation côté sortie d'embrayage du côté de la sortie dudit embrayage d'entrée ($C_I$), un moyen de détection d'état d'arrêt (110) pour détecter l'état d'arrêt d'un véhicule, un moyen de détection d'opération de démarrage (111) détectant l'opération de démarrage du conducteur, et une unité de commande (114),

dans lequel ladite unité de commande hydraulique (40) comprend : un servomécanisme hydraulique (104) pour appliquer/relâcher l'embrayage d'entrée ($C_I$), une électrovanne (105) de génération de pression d'huile de signal de commande pour générer une pression d'huile de signal de commande, une vanne de commande (106) pour régler une pression de rapport de marche avant selon la pression d'huile de signal de commande pour générer une pression d'huile de commande, une électrovanne (108) de génération de pression d'huile de signal de changement pour générer une pression d'huile de signal de changement, et une vanne de changement de régime (107) adaptée pour être changée par ladite pression d'huile de signal de changement, pour prendre une première position, dans laquelle elle fournit la pression de rapport de marche avant audit servomécanisme hydraulique (104), et une seconde position dans laquelle elle fournit la pression d'huile de commande audit servomécanisme hydraulique (104), et

dans lequel ladite unité de commande (114) comprend : un moyen de génération de sortie de passage (115) pour générer une sortie de passage pour obtenir les différentes vitesses, un moyen de réduction de pression (116) pour transmettre, lorsque l'état d'arrêt du véhicule est détecté par ledit moyen de détection d'état d'arrêt (110), un signal de changement au solénoïde de ladite électrovanne (108) de génération de pression d'huile de signal de changement pour mettre ladite vanne de changement de régime (107) dans la seconde position, et un signal de commande au solénoïde de ladite électrovanne (105) de génération de pression d'huile de signal de commande pour réduire la pression d'huile de commande afin de mettre ledit embrayage d'entrée ($C_I$) dans un état relâché déterminé au préalable, un moyen d'augmentation de pression (117) qui transmet, quand l'opération de démarrage est détectée par ledit moyen de détection d'opération de démarrage (111), le signal de commande au solénoïde de ladite électrovanne (105) de génération de pression d'huile de signal de commande pour augmenter la pression d'huile de commande afin de mettre ledit embrayage d'entrée ($C_I$) dans un état appliqué déterminé au préalable,

**caractérisé**

**en ce que** ledit moyen d'augmentation de pression (117) transmet, quand ledit embrayage d'entrée ($C_I$) se met dans un état appliqué déterminé au préalable, le signal de changement au solénoïde de ladite électrovanne (108) de génération de pression d'huile de signal de changement pour mettre ladite vanne de changement de régime (107) dans la première position,

par un moyen de décision d'échec (118) pour décider un échec si la différence de vitesse de rotation d'entrée/sortie de l'embrayage entre la vitesse de rotation du côté entrée et la vitesse de rotation du côté sortie dudit embrayage d'entrée ($C_I$) est supérieure à la valeur établie qui est établie en fonction de la différence de vitesse de rotation d'entrée/sortie de l'embrayage quand l'opération de démarrage est détectée par ledit moyen de détection d'opération de démarrage (111), et

par un moyen de sécurité intégrée (119) pour obliger ledit moyen de génération de sortie de passage (115) à générer une sortie de passage à un rapport supérieur de préférence de la sortie du signal de commande par ledit moyen d'augmentation de pression (117), quand la décision d'échec est exécutée par ledit moyen de décision d'échec (118), pour transmettre le signal de changement au solénoïde de ladite électrovanne (108) de génération de pression d'huile de signal de changement pour mettre de ce fait ladite vanne de changement de régime (107) dans la première position.

2. Système de commande pour transmission automatique, comprenant : une unité de transmission de fluide (12) destinée à recevoir une rotation provenant d'un moteur (10), une unité de changement de vitesse (16) comprenant un embrayage d'entrée ($C_I$) à appliquer lorsqu'un rapport de marche avant est sélectionné, de telle sorte que la rotation de ladite unité de transmission de fluide (12) y est appliquée en entrée quand ledit embrayage d'entrée ($C_I$) est appliqué, une unité de commande hydraulique (40) pour établir une pluralité de vitesses dans ladite unité de changement de vitesse (16), un premier moyen de détection de vitesse de rotation (101) pour détecter une vitesse de rotation côté entrée d'embrayage du côté de l'entrée de l'embrayage d'entrée ($C_I$), un second moyen de détection de vitesse de rotation (102) détectant la vitesse de rotation côté sortie d'embrayage du côté de la sortie dudit embrayage d'entrée ($C_I$), un moyen de détection d'opération de changement de rapport détectant une opération de changement vers un rapport de marche avant, et une unité de commande (114),

dans lequel ladite unité de commande hydraulique (40) comprend : un servomécanisme hydraulique (104) pour appliquer/relâcher l'embrayage d'entrée ($C_I$), une électrovanne (105) de génération de pression d'huile de signal de commande pour générer une pression d'huile de signal de commande, une vanne de commande (106) pour régler une pression de rapport de marche avant selon la la valeur établie qui est établie en fonction de la différence de vitesse de rotation d'entrée/sortie de l'embrayage quand l'opération de démarrage est détectée par un moyen de détection d'opération de démarrage (111), et

par un moyen de sécurité intégrée (119) pour obliger ledit moyen de génération de sortie de passage (115) à générer une sortie de passage à un rapport supérieur de préférence de la sortie du signal de commande par ledit moyen d'augmentation de pression (117), quand la décision d'échec est exécutée par ledit moyen de décision d'échec (118), pour transmettre le signal de changement au solénoïde de ladite électrovanne (108) de génération de pression d'huile de signal de changement pour mettre de ce fait ladite vanne de changement de régime (107) dans la première position.

3. Système de commande pour transmission automatique selon la revendication 1 ou 2, comprenant en outre :

un moyen de détection de vitesse de rotation de sortie (51) pour détecter la vitesse de rotation de sortie de ladite unité de changement de vitesse (16),

dans lequel ledit second moyen de détection de vitesse de rotation (102) détecte la vitesse de rotation côté sortie d'embrayage en fonction de la vitesse de rotation de sortie et du rapport d'engrenage du rapport qui est obtenu par ladite unité de changement de vitesse (16).

4. Système de commande pour transmission automatique selon la revendication 1, 2 ou 3,

dans lequel ladite unité de commande (114) comprend en outre un moyen de commande de couple moteur pour générer un signal de commande de couple moteur, quand la décision d'échec est prise par ledit moyen de décision d'échec (118), pour réduire le couple du moteur (10) jusqu'à la fin de l'application dudit embrayage d'entrée ($C_I$) au plus court.

5. Système de commande pour transmission automatique selon l'une quelconque des revendications 1 à 4,

dans lequel ledit moyen de sécurité intégrée (119) oblige ledit moyen de génération de sortie de passage (115), quand la décision d'échec est prise par ledit moyen de décision d'échec (118), à générer une sortie de passage à un rapport supérieur avant la transmission du signal de commande par ledit moyen d'augmentation de pression (117), et transmet le signal de changement, après que le passage au rapport supérieur a été accompli, au solénoïde de ladite électrovanne (108) de génération de pression d'huile de signal de changement pour mettre ladite vanne de changement de régime (107) dans la première position.

6. Système de commande pour transmission automatique selon l'une quelconque des revendications 1 à 5,

dans lequel l'unité de commande (114) comprend en outre un moyen d'inhibition de réduction de pression pour inhiber les sorties du signal de changement et du signal de commande par ledit moyen de réduction de pression (116) quand la décision d'échec est prise par ledit moyen de décision d'échec (118).

7. Système de commande pour transmission automatique selon l'une quelconque des revendications 1 à 6,

dans lequel l'unité de commande (114) comprend en outre un moyen d'inhibition d'augmentation de pression pour inhiber les sorties du signal de changement et du signal de commande par ledit moyen d'augmentation de pression (117) quand la décision d'échec est prise par ledit moyen de décision d'échec (118).

FIG. 1

EP 0 733 508 B1

12 Torque Converter

16 Transmission Unit

10 — Engine

$C_1$

101 — 1st R.P.M. Detection Means

102 — 2nd R.P.M. Detection Means

40 — Hydraulic Control UNit

104 — Hydraulic Servo

108 — Change Signal Oil Pressure Generating Solenoid Valve

110 — Stop State Detection Means

105 — Control Signal Oil Pressure Generating Solenoid Valve

106 — Control Valve

107 — Change-over Valve

111 — Starting Operation Detection Means

118 — Fail Decision Means

115 — Shift Output Generating Means

116 — Pressure Reducing Means

Fail-Safe Means

114 — Control Unit

117 — Pressure Boosting Means

119

# FIG. 2

# FIG. 3

| | | SOLENOID | | | CLUTCH | | | BRAKE | | | | ONE-WAY CLUTCH | | |
|---|---|---|---|---|---|---|---|---|---|---|---|---|---|---|
| | | S1 | S2 | S3 | C1 | C2 | C3 | B1 | B2 | B3 | B4 | F1 | F2 | F3 |
| R | | × | ○ | × | × | ○ | × | × | × | ○ | ○ | × | × | × |
| N | | × | ○ | × | × | × | × | × | × | × | ○ | × | × | × |
| D | 1 ST | × | ○ | △ | ○ | × | × | × | × | (○) | ○ | × | ○ | ○ |
| | 2 ND | ○ | ○ | △ | ○ | × | × | ○ | ○ | × | ○ | ○ | × | ○ |
| | 3 RD | ○ | × | × | ○ | × | ○ | ○ | ○ | × | × | ○ | × | × |
| | 4 TH | × | × | × | ○ | ○ | ○ | × | ○ | × | × | × | × | × |

FIG. 4

# FIG. 5

# FIG. 6

```
        ┌─────────────┐
        │    START    │
        └──────┬──────┘
               │
               ▼
 ┌─────────────────────────┐
 ║  N-D Change Control     ║  S1
 └─────────────────────────┘
               │
               ▼
 ┌─────────────────────────┐
 ║   Neutral Control       ║  S2
 └─────────────────────────┘
               │
               ▼
        ┌─────────────┐
        │    E N D     │
        └─────────────┘
```

# FIG. 7

# FIG. 8

# FIG. 9

C-1 Oil
Pressure
$P_{C1}$

0          Input Torque

# FIG. 10

C-1 Oil
Pressure
$P_{C1}$

0          Engine R. P. M.   $N_E$

# FIG. 11

C-1 Oil
Pressure
$P_{C1}$

0          Throttle Opening θ

# FIG. 12

```
        ╭─────────────────────────────╮
        │      START OF NEUTRAL        │
        │    CONTROL SUBROUTINE        │
        ╰─────────────────────────────╯
                      │
        ┌─────────────────────────────┐
        │   1st Clutch Release Control │   S 2 − 1
        └─────────────────────────────┘
                      │
        ┌─────────────────────────────┐
        │      In-Neutral Control      │   S 2 − 2
        └─────────────────────────────┘
                      │
        ┌─────────────────────────────┐
        │   1st Clutch Apply Control   │   S 2 − 3
        └─────────────────────────────┘
                      │
              ╭───────────────╮
              │     E N D      │
              ╰───────────────╯
```

# FIG. 13

START OF 1ST CLUTCH RELEASE
CONTROL SUBROUTINE

| Estimation of Vehicle Speed Zero | S2-1-1

Starting Conditions
Satisfied ? — S2-1-2 N

Y

Time $T_0$
Elapsed ? — N S2-1-3

Y

| Output 2nd-Speed Shift | S2-1-4

| 3rd Solenoid Signal ON | S2-1-5

| Detect Engine R.P.M. | S2-1-6

| Output C-1 Oil Pressure
for Engine R.P.M. | S2-1-7

( 4 )

# FIG. 14

④

| 2nd Fail Check | S2-1-8

Time T₂ Elapsed ? ——→ S2-1-9  N

Y

| Detect Engine R.P.M. | S2-1-10

Engine R.P.M. Changed ? — S2-1-11  Y

N

S2-1-12
| Set C-1 Oil Pressure for Reference Engine R.P.M. |

S2-1-13
| Sweep down C-1 Oil Pressure |

N — $e > e_1$  S2-1-14

Y

( E N D )

# FIG. 15

Input
Torque
$T_T$

$T_T$

$P_{TK}$

C-1 Oil
Pressure
$P_{C1}$

Engine R. P. M.  $N_E$

# FIG. 16

START OF VEHICLE SPEED ZERO
ESTIMATE SUBROUTINE

$\Delta N_{C1(i)} = N_{C1(i)} - N_{C1(i-1)}$  S2-1-1-1

$A = \Delta N_{C1(i)} / \Delta t$  S2-1-1-2

$T_0 = N_{C1(i)} / A$  S2-1-1-3

END

# FIG. 17

```
        ╭─────────────────────────╮
        │   START OF IN-NEUTRAL    │
        │   CONTROL SUBROUTINE     │
        ╰─────────────────────────╯
                     │
              ┌──────────────┐
              │  Initialize  │  S2-2-1
              └──────────────┘
                     │
         ┌──────────────────────────┐
         │     Hold C-1 Pressure    │  S2-2-2
         └──────────────────────────┘
        N        ╱──────────╲
         ◄──────<  T₃ Elapsed ? >  S2-2-3
                  ╲──────────╱
     (5)──────────────► Y
              ┌───────────────────┐
              │   3rd Fail Check   │  S2-2-4
              └───────────────────┘
                     │
    ┌────────────────────────────────────────┐
    │ Differential Rotation : △ N ← N_E - N_C1 │  S2-2-5
    └────────────────────────────────────────┘
                     │
        Y      ╱──────────────╲
   (6)◄───────<  Sampling Time ? >  S2-2-6
               ╲──────────────╱
                     │ N
              ╱──────────╲
             <  F = ON ?   >  S2-2-14
              ╲──────────╱  N
                  │ Y
            ╱────────────────╲
           < △N−△N_m ≦△N_R >  S2-2-15
            ╲────────────────╱  N
                  │ Y
         ┌──────────────────────────┐
         │  Decide 1st Clutch Active,│  S2-2-16
         │    and Reduce Pressure    │
         └──────────────────────────┘
                     │
         ┌──────────────────────────┐
         │ P_C1m ← P_C1 before Reduced│  S2-2-17
         └──────────────────────────┘
                     │
                    (7)
```

Initialize — S2-2-1

Hold C-1 Pressure — S2-2-2

$T_3$ Elapsed ? — S2-2-3

3rd Fail Check — S2-2-4

Differential Rotation : $\triangle N \leftarrow N_E - N_{C1}$ — S2-2-5

Sampling Time ? — S2-2-6

F = ON ? — S2-2-14

$\triangle N - \triangle N_m \leqq \triangle N_R$ — S2-2-15

Decide 1st Clutch Active, and Reduce Pressure — S2-2-16

$P_{C1m} \leftarrow P_{C1}$ before Reduced — S2-2-17

# FIG. 18

⑥

S2-2-7

$|\Delta N - \Delta N_m| \leq \Delta N_R$ —— N

Y

S2-2-10

$\Delta N - \Delta N_m \leq \Delta N_R$ —— Y

N

S2-2-8

$C < C_R$ —— N

Y

S2-2-9

Decide 1st Clutch
Inactive, and Boost
Pressure

S2-2-12

Decide 1st Clutch
Active, and Reduce
Pressure

S2-2-13

$P_{c1m} \leftarrow P_{c1}$ before Reduction

S2-2-11

Hold 1st
Clutch
Inactive

⑦

S2-2-18

N ⑤ ← Ending
Conditions
Satisfied ?

Y

END

# FIG. 19

$\Delta N$

Differential Rotation

(Dragging) Torque

Inactive State $\longleftrightarrow$ Active State

Full Stroke State

Torque

Differential Rotation

0

Piston Stroke

Full

# FIG. 20

$T_3$

$\Delta N_m \leftarrow \Delta N$

$N_E$

$\Delta N_m$

$N_{ci}$

$\Delta N$

$P_{ci}$

$\Delta P_{UP}$

$\Delta P_{DOWN}$

Sampling Time

Sampling Time

Sampling Time

Sampling Time

# FIG. 21

START OF 1ST CLUTCH APPLY
CONTROL SUBROUTINE

$N_{(1)} \leftarrow N_{c1}$   S2-3-1

$P_{c1} = P_{c1m} + P_{c1s}$   S2-3-2

⑨

1st Fail Check   S2-3-3

N   $N_{c1} < N_{(1)} - DSN$   S2-3-4

Y

Y   1st Speed ?   S2-3-5

N

Output 1st-Speed Shift   S2-3-6

Sweep up C-1 Oil Pressure   S2-3-7

⑧

# FIG. 22

⑧

Time T₄ Elapsed ?  Y  S2-3-8

N

$N_{c1} < DEN$  N  S2-3-9

Y

Time T₅ Elapsed ?  N  S2-3-10

Y

3rd Solenoid Signal OFF ?  S2-3-11  ⑨

END

# FIG. 23

Set Value

Throttle Opening θ

# FIG. 24

```
        ┌─────────────────────┐
        │  START OF 1ST FAIL   │
        │  CHECK SUBROUTINE    │
        └─────────────────────┘
                   │
                   │         S1-5-1        N
              ◇─────────────◇──────────────────────┐
              │  $P_{c_i} > PFC1$ │                  │
              ◇─────────────◇                       │
                   │ Y                              │
                   │         S1-5-2        N         │
              ◇─────────────◇──────────────────┐    │
              │   $t_m > OT$  │                  │    │
              ◇─────────────◇                  │    │
                   │ Y                          │    │
        ┌─────────────────────┐                │    │
        │ Start Timing of 1st Fail │  S1-5-3    │    │
        │     Check Timer      │               │    │
        └─────────────────────┘                │    │
                   │                            │    │
           ┌───────┤                            │    │
           │       │                            │    │
           │       │    S1-5-4          N       │    │
           │  ◇───────────────────◇────────────┤    │
           │  │ $N_{c_i} - N_0 \cdot i \geqq N_{(1)} + NFC$ │    │    │
           │  ◇───────────────────◇            │    │
           │       │ Y                          │   (11)
           │  N    │      S1-5-5                │
           └──◇──────────────◇                 │
              │ Time $T_{FC_i}$ Elapsed ? │     │
              ◇──────────────◇            │     │
                   │ Y                    │     │
        ┌──────────────────┐             │     │
        │   Decide Fail    │  S1-5-6     │     │
        └──────────────────┘             │     │
                   │                      │     │
        ┌───────────────────────────────────┐ │
        │ Engine Torque Reduction Signal ON │ S1-5-7
        └───────────────────────────────────┘
                   │
                  (10)
```

EP 0 733 508 B1

# FIG. 25

```
                    (10)
                     │
        ┌────────────────────────┐
        │ Output 4th-Speed Shift │  S1-5-8
        └────────────────────────┘
                     │
        ┌────────────────────────┐
        │   Start Timings of 2nd and │  S1-5-9
        │   3rd Fail Check Timers    │
        └────────────────────────┘
                     │
         N      ╱─────────────╲        S1-5-10
        ┌──────<  Time T_FC2 Elapsed ? >
        │       ╲─────────────╱
                     │ Y
        ┌────────────────────────┐
        │  3rd Solenoid Signal OFF │  S1-5-11
        └────────────────────────┘
                     │
         N      ╱─────────────╲        S1-5-12
        ┌──────<  Time T_FC3 Elapsed ? >
        │       ╲─────────────╱
                     │ Y
        ┌─────────────────────────────────┐
        │ Engine Torque Reduction Signal OFF │  S1-5-13
        └─────────────────────────────────┘
                     │
        ┌────────────────────────┐
        │  Inhibit N-D Change Control │  S1-5-14
        │    and Neutral Control      │
        └────────────────────────┘
                     │              (11)
                     │←──────────────┘
                     │
                 ( E N D )
```

44

# FIG. 26

# FIG. 27

```
        ┌─────────────────────┐
        │  START OF 2ND FAIL  │
        │  CHECK SUBROUTINE   │
        └─────────────────────┘
                   │
                   │         S2-1-8-1        N
              ◇─────────────────◇──────────────────┐
               ◇   t_m > OT   ◇                     │
                   ◇─────────◇                      │
                   │ Y                              │
        ┌───────────────────────────────────┐      │
        │ Start Timing of 4th Fail Check Timer│ S2-1-8-2  │
        └───────────────────────────────────┘      │
                   │                                │
         ┌─────────→│                               │
         │         │        S2-1-8-3         N      │
         │    ◇──────────────────◇───────────────┐  │
         │     ◇   N_ci ≧ NFC1  ◇                │  │
         │        ◇──────────◇                   │  │
         │         │ Y                           │  │
         │    N    │      S2-1-8-4               │  │
         └────◇──────────────────◇              │  │
              ◇  Time T_FC4 Elapsed ? ◇         │  │
                   ◇──────────◇                 │  │
                   │ Y                          │  │
            ┌──────────────┐                    │  │
            │  Decide Fail │ S2-1-8-5           │  │
            └──────────────┘                    │  │
                   │                            │  │
        ┌────────────────────────────┐         │  │
        │ 3rd Solenoid Signal OFF,    │ S2-1-8-6│  │
        │ and Output 1st-Speed Shift  │         │  │
        └────────────────────────────┘         │  │
                   │                            │  │
        ┌────────────────────────────┐         │  │
        │ Inhibit N-D Change Control  │ S2-1-8-7│  │
        │ and Neutral Control         │         │  │
        └────────────────────────────┘         │  │
                   │←───────────────────────────┘  │
                   │←──────────────────────────────┘
                   │
               ┌─────────┐
               │  END    │
               └─────────┘
```

# FIG. 28

Fail Decide

S₃ ——— ON ——— OFF

T₂

T_FC4

NFC1

SLT

N_cι

# FIG. 29

START OF 3RD FAIL
CHECK SUBROUTINE

S2-2-4-1    N
$P_{cι} > PFC2$

Y

S2-2-4-2    N
$N_E \geqq N_{idι}$

Y

S2-2-4-3    N
$t_m > OT$

Y

S2-2-4-4    N
Shift Position
at D, 3, 2, or L ?

Y

(12)        (13)

# FIG. 30

```
                              ( 12 )
                                │
        ┌───────────────────────────────────────┐
        │  Start Timing of 5th Fail Check Timer  │──  S2-2-4-5
        └───────────────────────────────────────┘
                                │                           ( 13 )
                                │                             │
                                ▼   S2-2-4-6      N           │
                           ◇─────────────◇──────────────────▶│
                           │ N_c1 ≧ NFC1 │                    │
                           ◇─────────────◇                    │
                                │ Y                           │
                                ▼   S2-2-4-7                   │
              N         ◇──────────────────◇                  │
        ┌──────────────│ Time T_FC5 Elapsed ?│                │
        │               ◇──────────────────◇                 │
        │                       │ Y                           │
        │                       ▼                             │
        │           ┌───────────────────┐                     │
        │           │   Decide Fail     │── S2-2-4-8          │
        │           └───────────────────┘                     │
        │                       │                             │
        │           ┌───────────────────────────┐             │
        │           │ 3rd Solenoid Signal OFF,   │── S2-2-4-9 │
        │           │ and Output 1st-Speed Shift │            │
        │           └───────────────────────────┘             │
        │                       │                             │
        │           ┌───────────────────────────┐             │
        │           │ Inhibit N-D Change Control │── S2-2-4-10 │
        │           │ and Neutral Control        │            │
        │           └───────────────────────────┘             │
        │                       │                             │
        │                       ◀─────────────────────────────┘
        │                       │
        │                       ▼
        │                   ( E N D )
        └────────────────────────
```

EP 0 733 508 B1

# FIG. 31

1st　　　Release　　In-Neutral　　　　　　　　Fail Decision
Clutch　Control　　Control

$T_{FCS}$

$N_E$

NFC1

$N_{C1}$

$P_{TH}$

PFC2

O N　　　　　OFF

$S_3$

49

# FIG. 32

EP 0 733 508 B1

$N_E$

$N_{C1}$

$T_b$

$\Delta t$

$N_{(1)}$

$e_1$

DSN

DEN

$P_{C1}$

$T_2$

$P_{THDOWN}$

$T_{DOWN}$

$P_B$

$\Delta t_B$

$P_{C1S}$

$\Delta P_B$

$T_5$

$P_{C1}$

OFF

ON

$S_3$

1st Clutch
Release Control

In-Neutral Control

1st Clutch Apply Control

(2nd Speed)

(1st Speed)

Shift.
Output

50